# EUROPEAN PATENT SPECIFICATION

(11) **EP 4 435 957 B1**
(45) Date of publication and mention of the grant of the patent: **21.10.2026**
(21) Application number: 23855158.4
(22) Date of filing: 17.08.2023
(51) Int. Cl.: H01M 50/507, H01M 50/516, H01M 50/553, H01M 50/593, H01M 50/211

(54) **BATTERY MODULE AND BATTERY PACK COMPRISING THE SAME**
BATTERIEMODUL UND BATTERIEPACK DAMIT
MODULE DE BATTERIE ET BLOC-BATTERIE LE COMPRENANT

(30) Priority: 17.08.2022 KR 20220102827
(43) Date of publication of application: 25.09.2024
(73) Proprietor: LG Energy Solution, Ltd., Seoul 07335 (KR)
(72) Inventor: JU, Eunah, Daejeon 34122 (KR); SEO, Sung Won, Daejeon 34122 (KR); YUN, Hyeonki, Daejeon 34122 (KR); TANNENBERGER, Günter, 85123 Pobenhausen (DE); HARASZTOSI, Uwe, 74172 Neckarsulm (DE)
(74) Representative: Plasseraud IP
(86) International application number: PCT/KR2023/012153
(87) International publication number: WO 2024/039192

(56) References cited:
- JP-A- 2022 020 832
- JP-A- 2022 020 832
- KR-A- 20170 025 074
- KR-A- 20180 125 089
- KR-A- 20200 033 664
- KR-A- 20200 033 664
- KR-A- 20200 034 469

## Description

### [TECHNICAL FIELD]

### Cross Citation with Related Application(s)

This application claims priority to and the benefit of Korean Patent Application No. 10-2022-0102827 filed on August 17, 2022 with the Korean Intellectual Property Office.

The present disclosure relates to a battery module and a battery pack including the same, and more particularly, to a battery module having improved energy density, and a battery pack including the same

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are disposed with a separator being interposed therebetween, and a battery case that seals and houses the electrode assembly together with the electrolyte.

Generally, the lithium secondary battery may be classified into a can-type secondary battery in which the electrode assembly is built in a metal can, and a pouch-type secondary battery in which the electrode assembly is built in a pouch of an aluminum laminate sheet, depending on the shape of the exterior material.

In the case of a secondary battery used for small-sized devices, two to three battery cells are disposed, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BDU (battery disconnect unit), a BMS (battery management system), and a cooling system to form a battery pack.

When configuring a battery pack, it is common to configure a battery module first and adding various control and protection systems such as BDU (Battery Disconnect Unit), BMS (Battery Management System) and a cooling system to such a battery module to form a battery pack. A conventional battery pack is produced by arranging battery modules in a housing structure such as a pack tray, and such a battery pack is mounted in vehicles, and the like.

In recent years, research has continued into battery modules or battery packs that have improved space utilization, so as to increase energy density within a limited space and enable the weight reduction of a product.

JP2022020832A discloses a secondary battery module. KR20200033664A discloses a battery module, battery pack comprising battery module, and vehicle comprising battery pack.

### [DETAILED DESCRIPTION OF THE INVENTION]

### [Technical Problem]

It is an object of the present disclosure to provide a battery module that can increase energy density and reduce weight by improving a connection method between internal battery cells, and a battery pack including the same.

However, the technical problems to be solved by embodiments of the present disclosure are not limited to the above-described problems, and can be variously expanded within the scope of the technical idea included in the present disclosure.

### [Technical Solution]

According to one embodiment of the present disclosure, there is provided a battery module comprising: a battery cell stack including a first battery cell stack and a second battery cell stack in which a plurality of battery cells are stacked; and a center busbar assembly located between the first battery cell stack and the second battery cell stack, wherein the first battery cell stack and the second battery cell stack are disposed along a direction perpendicular to the direction in which the battery cells in the first battery cell stack or the second battery cell stack are stacked, wherein any one battery cell included in the first battery cell stack and any one battery cell included in the second battery cell stack are electrically connected through a center busbar included in the center busbar assembly to form a double cell structure, and wherein the battery cell stack includes at least one double cell structure.

The battery cells are pouch cells and may include electrode leads protruding in both directions, and the electrode lead of any one battery cell included in the first battery cell stack and the electrode lead of any one battery cell included in the second battery cell stack may be electrically connected via the center busbar to form a double cell structure.

The electrode lead of any one battery cell included in the first battery cell stack and the electrode lead of any one battery cell included in the second battery cell stack may be welded and joined to the center busbar.

The center busbar is disposed in a plurality of numbers, and the center busbar assembly may further comprise a spacer located between the center busbars and occupying the space between the center busbars.

The spacer may be disposed in a plurality of numbers, a protrusion and a coupling hole are respectively formed on one surface and the other surface of the spacer, and a through hole may be formed in the center busbar. The protrusion of one spacer passes through the through hole of the center busbar and may be then inserted into the coupling hole of the other spacer.

The spacers may be disposed in a plurality of numbers, and the spacers may be assembled by engaging with hooks.

The battery module may further comprise a pair of terminal busbar assemblies located at both ends of the center busbar assembly between the first battery cell stack and the second battery cell stack. The terminal busbar assembly may include a terminal busbar, and the terminal busbar may include a first portion connected to the electrode lead of the battery cell, and a second portion extending from the first portion and exposed to the outside.

The electrode lead of the battery cell disposed on the outermost side in one direction of the first battery cell stack may be connected to the first portion of the terminal busbar included in any one of the terminal busbar assemblies. The electrode lead of the battery cell disposed on the outermost side in the other direction of the second battery cell stack may be connected to the first portion of the terminal busbar included in the other one of the terminal busbar assemblies.

The terminal busbar assembly may further comprise a terminal spacer that faces one surface of the first portion of the terminal busbar; and a terminal insulation plate that covers the other surface of the first portion of the terminal busbar.

The battery module may further comprise a first external busbar frame located on one side of the first battery cell stack, and a second external busbar frame located on one side of the second battery cell stack. The electrode lead protruding from the battery cells included in the first battery cell stack toward the first external busbar frame may be connected to a first external busbar mounted on the first external busbar frame. The electrode lead protruding from the battery cells included in the second battery cell stack toward the second external busbar frame may be connected to a second external busbar mounted on the second external busbar frame.

On the basis of the first battery cell stack, the first external busbar frame may be located in a direction opposite to the direction in which the center busbar assembly is located. On the basis of the second battery cell stack, the second external busbar frame may be located in a direction opposite to the direction in which the center busbar assembly is located.

A first sensing unit and a second sensing unit for voltage sensing may be mounted on each of the first external busbar frame and the second external busbar frame. A circuit unit may connect at least one of the first sensing unit or the second sensing unit and the center busbar.

The center busbar may include a first portion connected to the electrode lead of the battery cell; and a second portion extending from the first portion and connected to the circuit unit. The circuit unit extends to the lower end of the center busbar assembly and may be connected to the second portion of the center busbar.

The battery module may further comprise an upper insulating member located in an upper part of the center busbar assembly and including an electrically insulating material.

The upper insulating member may include a first wall portion facing the first battery cell stack; a second wall portion facing the second battery cell stack; and a bottom portion connecting the first wall portion and the second wall portion and facing the center busbar assembly.

The center busbar may be disposed in a plurality of numbers, the center busbar assembly may further comprise a spacer located between the center busbars and occupying the space between the center busbars. The spacer and the upper insulating member may be assembled by engaging with hooks.

The battery module may further comprise a lower insulating member located in a lower part of the center busbar assembly and including an electrically insulating material.

The center busbar may be disposed in a plurality of numbers, and the center busbar assembly may further comprise a spacer located between the center busbars and occupying the space between the center busbars. The spacer and the lower insulating member may be assembled by engaging with hooks.

According to another embodiment of the present disclosure, there is provided a battery pack comprising the battery module.

### [Advantageous Effects]

According to the embodiments of the present disclosure, battery cells are connected in the longitudinal direction using a center busbar assembly to form a double cell structure, thereby making it possible to improve space utilization in the longitudinal direction. Thereby, it is possible to increase the energy density and reduce the weight of the battery module and the battery pack including the same.

Effects obtainable from the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is a perspective view illustrating a battery module according to an embodiment of the present disclosure;
FIG. 2 is an exploded perspective view of the battery module of FIG. 1;
FIG. 3 is a side view illustrating one of the battery cells included in the battery module of FIG. 2;
FIGS. 4 and 5 are a perspective view and a side view, each of which illustrates a double cell structure according to an embodiment of the present disclosure;
FIG. 6 is a perspective view illustrating a center busbar assembly and a terminal busbar assembly included in the battery module of FIG. 2;
FIG. 7 is an exploded perspective view illustrating a center busbar assembly according to an embodiment of the present disclosure;
FIGS. 8 (a) and (b) are diagrams illustrating the center busbar and spacer included in the center busbar assembly of FIG. 7 at various angles;
FIGS. 9 (a) and (b) are diagrams illustrating the spacer included in the center busbar assembly of FIG. 7 at various angles;
FIGS. 10 (a) and (b) are exploded perspective views illustrating the terminal busbar assembly of FIG. 6;
FIG. 11 is an exploded perspective view for explaining a connection configuration between a terminal busbar assembly and one of the battery cells according to an embodiment of the present disclosure;
FIG. 12 is an exploded perspective view illustrating a battery module according to a comparative example of the present disclosure;
FIG. 13 is a perspective view illustrating a first external busbar frame, a second external busbar frame, a first circuit unit, and a second circuit unit according to an embodiment of the present disclosure;
FIG. 14 is a front view of the first external busbar frame of FIG. 13 viewed from the "B" direction;
FIG. 15 is a rear view of the second external busbar frame of FIG. 13 viewed from the "C" direction;
FIG. 16 is a schematic diagram for explaining an HV connection configuration and an LV connection configuration in the battery module according to an embodiment of the present disclosure;
FIG. 17 is a perspective view illustrating a center busbar assembly, an upper insulating member, and a lower insulating member according to an embodiment of the present disclosure;
FIGS. 18 (a), (b) and (c) are diagrams illustrating the upper insulating member in FIG. 17 at various angles;
FIG. 19 is a partial diagram for explaining the connection configuration between the fastening hole of the upper insulating member and the second hook of the spacer;
FIG. 20 is a perspective view illustrating the lower insulating member of FIG. 17;
FIG. 21 is a partial diagram which enlarges and illustrates a section "A" of FIG. 1;
FIG. 22 is a partial diagram which enlargers and shows a state where a battery module according to an embodiment of the present disclosure is fixed to a mounting beam;
FIGS. 23 (a) and (b) are partial diagrams illustrating a connection configuration between the battery cell and the center busbar and a connection configuration between the battery cell and the terminal busbar, respectively;
FIGS. 24 (a), (b) and (c) are partial diagrams for explaining the process of assembling a terminal busbar and a terminal spacer; and
FIG. 25 is a partial diagram for explaining the process of stacking double cells.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

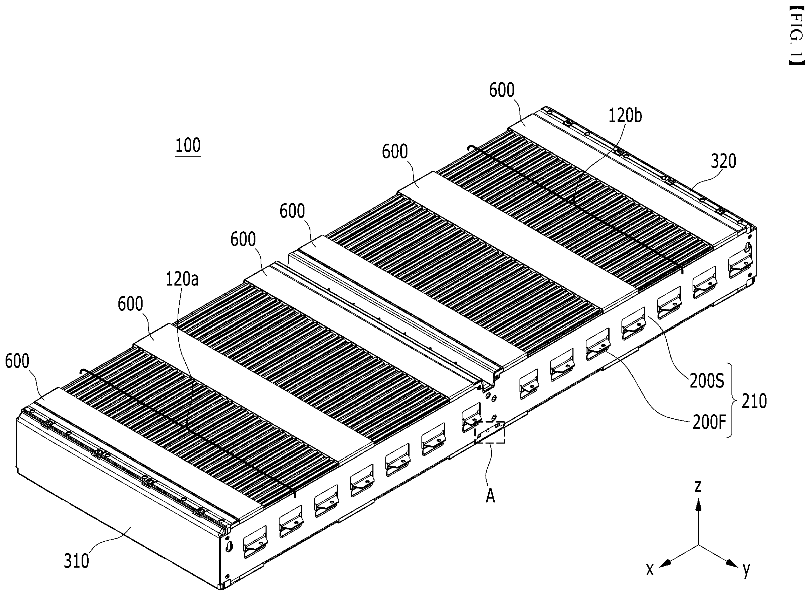

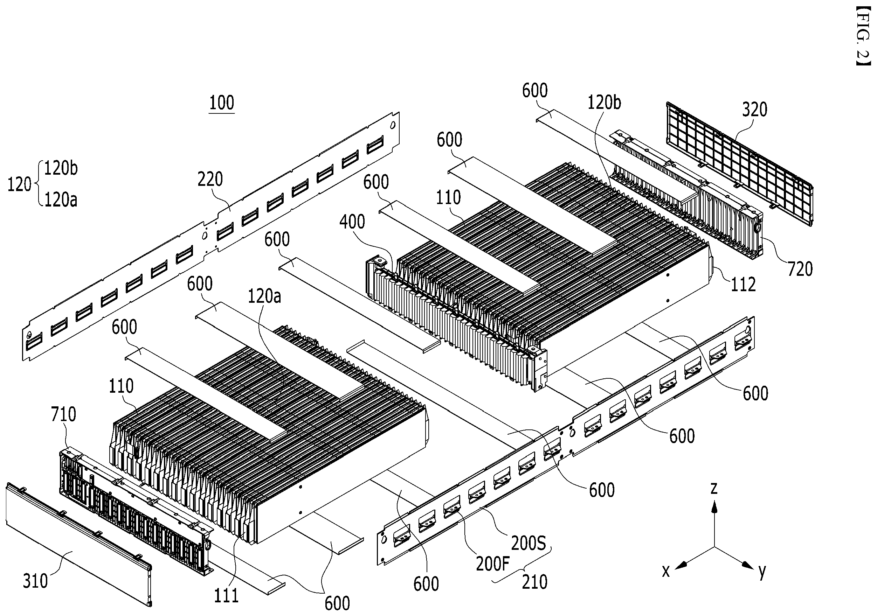

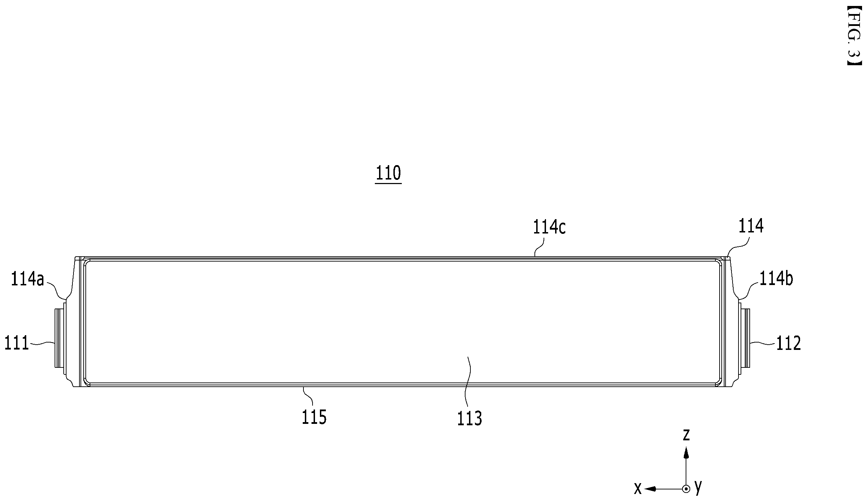

FIG. 1 is a perspective view illustrating a battery module according to an embodiment of the present disclosure. FIG. 2 is an exploded perspective view of the battery module of FIG. 1. FIG. 3 is a side view illustrating one of the battery cells included in the battery module of FIG. 2.

Referring to FIGS. 1 to 3, the battery module 100 according to an embodiment of the present disclosure includes a battery cell stack 120 including a first battery cell stack 120a and a second battery cell stack 120b in which a plurality of battery cells 110 are stacked, and a center busbar assembly 400 located between the first battery cell stack 120a and the second battery cell stack 120b.

First, the battery cell 110 is a pouch-type battery cell, and may include electrode leads 111 and 112 protruding in both directions. Such a pouch-type battery cell can be formed by housing an electrode assembly in a pouch case made of a laminate sheet including a resin layer and a metal layer, and then adhering the outer peripheral portion of the pouch case. The battery cell 110 may have a rectangular sheet structure. Specifically, the battery cell 110 according to the present embodiment may have a structure in which two electrode leads 111 and 112 protrude from one end 114a and the other end 114b of the cell main body 113, respectively. More specifically, the electrode leads 111 and 112 may protrude in opposite directions to each other, wherein one of such electrode leads 111 and 112 may be a cathode lead 111, and the other may be an anode lead 112. In the present embodiment, the direction between the cathode electrode lead 111 and the anode lead 112 of the battery cell 110 is referred to as the longitudinal direction of the battery cell 110. In one example, referring to FIGS. 2 and 3, the direction parallel to the x-axis may correspond to the longitudinal direction of the battery cell 110.

The battery cell 110 can be produced by joining both ends 114a and 114b of a pouch case 114 and one side portion 114c connecting them in a state in which an electrode assembly (not shown) is housed in a pouch case 114. In other words, the battery cell 110 according to an embodiment of the present disclosure has a total of three sealing portions, the sealing portions have a structure that is sealed by a method such as fusion, and the remaining other one side portion may be composed of a connection portion 115.

Such a battery cell 110 may be configured in a plural numbers, and the plurality of battery cells 110 may be stacked so as to be electrically connected to each other, thereby forming a battery cell stack 120, wherein the battery cell stack 120 includes a first battery cell stack 120a and a second battery cell stack 120b. Particularly, while the battery cells 110 stand upright, the battery cells 110 may be stacked along one direction in a state where one surfaces of the cell main body 113 face each other. FIG. 2 illustrates, by way of example, a state in which a plurality of battery cells 110 are stacked along a direction parallel to the y-axis. When a plurality of battery cells 110 are stacked along the direction parallel to the y-axis in this way, the electrode leads 111 and 112 in one battery cell 110 may protrude along the x-axis direction and the -x-axis direction, respectively.

In any one region, a plurality of battery cells 110 may be stacked along a direction parallel to the y-axis to form a first battery cell stack 120a, and in the other region, a plurality of battery cells 110 may be stacked along a direction parallel to the y-axis to form a second battery cell stack 120b.

The battery case 114 is generally formed in a laminated structure of resin layer/metal thin film layer/resin layer. For example, when the surface of the battery case is formed of an O (oriented)-nylon layer, it tends to slide easily due to external impact when stacking a plurality of battery cells to form a medium- and large-sized battery module. Therefore, in order to prevent this problem and maintain a stable laminated structure of battery cells, an adhesive member such as a tacky adhesive such as a double-sided tape or a chemical adhesive bonded by a chemical reaction during adhesion may be attached to the surface of the battery case to form a first battery cell stack 120a and a second battery cell stack 120b.

On the other hand, the first battery cell stack 120a and the second battery cell stack 120b are disposed along a direction perpendicular to the direction in which the battery cells 110 in the first battery cell stack 120a or the second battery cell stack 120b are stacked. In other words, the first battery cell stack 120a and the second battery cell stack 120b may be disposed along a direction in which the electrode leads 111 and 112 protrude on the basis of the battery cell 110. That is, the first battery cell stack 120a and the second battery cell stack 120b are disposed along the longitudinal direction of the battery cell 110. For example, as shown in FIG. 2, when a plurality of battery cells 110 are stacked along a direction parallel to the y-axis to form a first battery cell stack 120a and a second battery cell stack 120b, the first battery cell stack 120a and the second battery cell stack 120b may be disposed along a direction parallel to the x-axis.

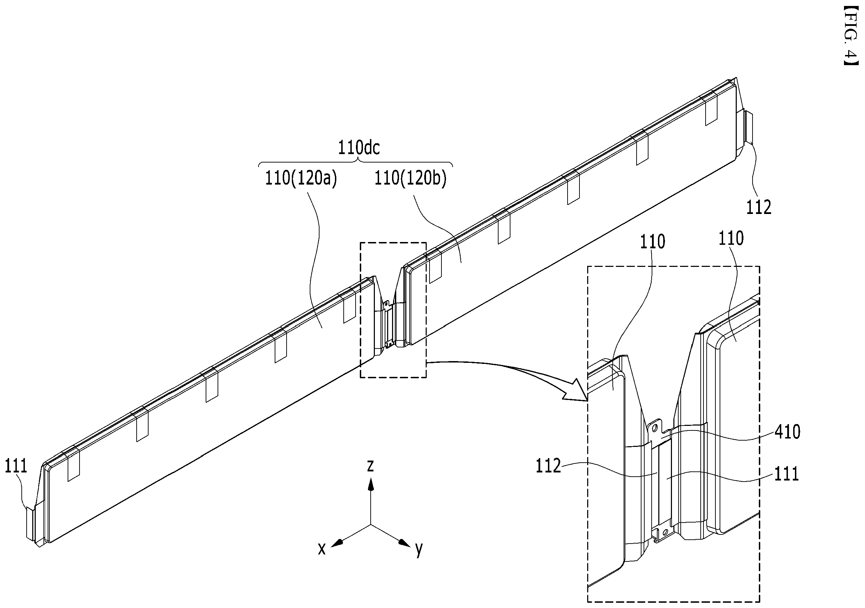

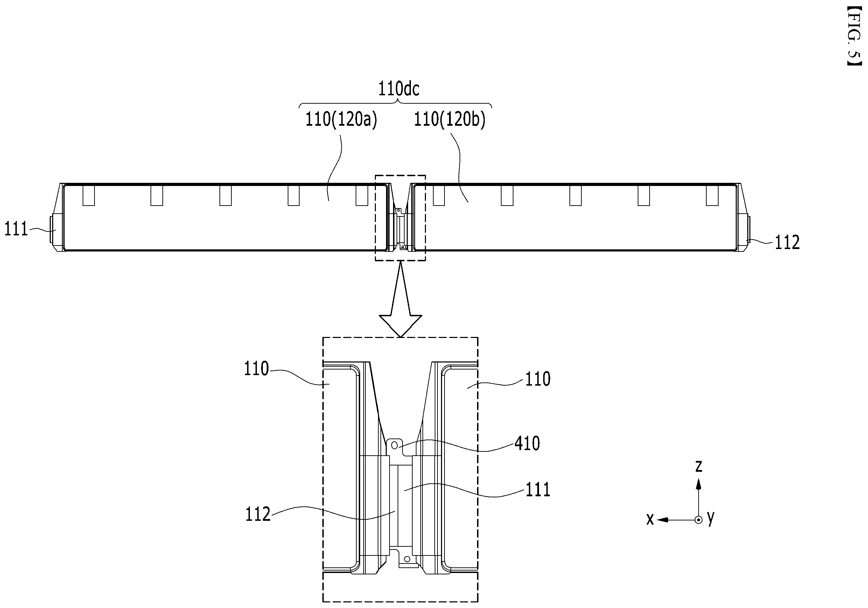

Next, the double cell structure according to the present embodiment will be described in detail with reference to FIGS. 4 and 5.

FIGS. 4 and 5 are a perspective view and a side view, each of which illustrates a double cell structure according to an embodiment of the present disclosure. Specifically, a state where one of the battery cells 110 included in the first battery cell stack 120a and one of the battery cells 110 included in the second battery cell stack 120b in FIG. 2 are connected is shown in FIGS. 4 and 5.

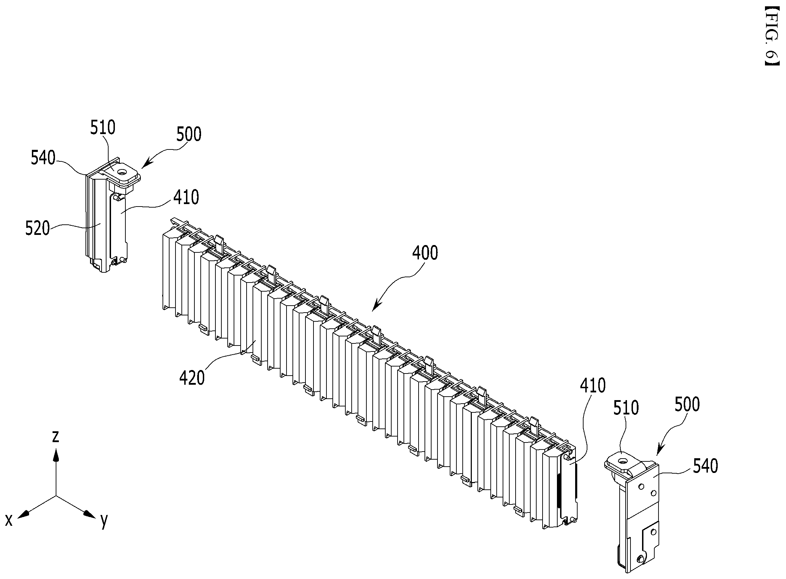

Referring to FIGS. 2 to 5 together, the center busbar assembly 400 according to the present embodiment includes a center busbar 410. Other configurations of the center busbar assembly 400 will be described again with reference to FIGS. 6 to 8.

One battery cell 110 included in the first battery cell stack 120a and one battery cell 110 included in the second battery cell stack 120b are electrically connected through a center busbar 410 included in the center busbar assembly 400 to form a double cell 110dc structure.

As mentioned previously, the center busbar assembly 400 is located between the first battery cell stack 120a and the second battery cell stack 120b. The battery cells 110 included in the first battery cell stack 120a and the battery cells 110 included in the second battery cell stack 120b are connected through a center busbar 410 included in the center busbar assembly 400. In FIGS. 4 and 5, the battery cell 110 located in the x-axis direction is a battery cell included in the first battery cell stack 120a, and the battery cell 110 located in the -x-axis direction is a battery cell included in the second battery cell stack 120b. The electrode lead 112 of any one battery cell 110 included in the first battery cell stack 120a and the electrode lead 111 of any one battery cell 110 included in the second battery cell stack 120b can be electrically connected through the center busbar 410 to form a double cell 110dc structure. By way of example, the anode lead 112 of any one battery cell 110 included in the first battery cell stack 120a and the cathode lead 111 of any one battery cell 110 included in the second battery cell stack 120b is electrically connected through the center busbar 410, so that a series connection between the battery cells 110 can be realized. The electrical connection method between the electrode leads 111 and 112 and the center busbar 410 is not particularly limited, and welding and joining can be applied by way of example.

The battery module 100 according to the present embodiment is configured such that, when electrically connecting the first battery cell stack 120a and the second battery cell stack 120b disposed along the longitudinal direction of the battery cell 110, the electrode leads 111 and 112 are directly connected to each other via the center busbar 410, without interposing a plate-shaped busbar frame or an insulating plate between them. The structure of the double cell 110dc in the present embodiment means a configuration in which respective electrode leads 111 and 112 are directly connected through a central busbar 410 in the two battery cells 110 that are disposed along the longitudinal direction of the battery cells 110, as shown in FIGS. 4 and 5. The battery cell stack 120 according to the present embodiment includes at least two double cell 110dc structure.

Next, the structure of the center busbar assembly 400 according to the present embodiment will be described in detail with reference to FIGS. 6 to 8, and the like.

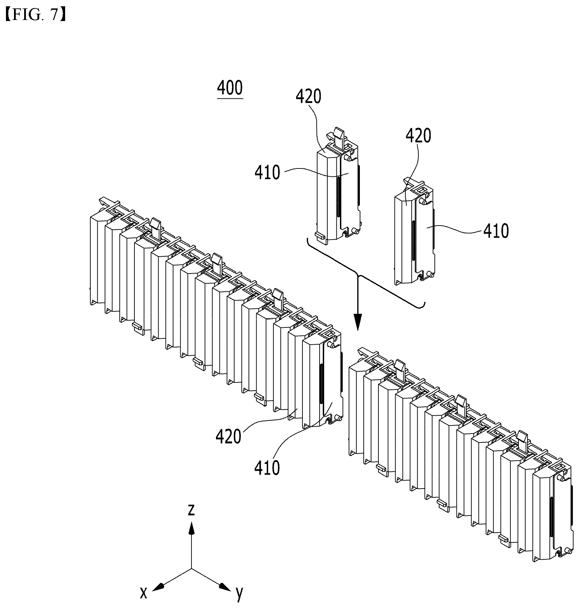

FIG. 6 is a perspective view illustrating a center busbar assembly and a terminal busbar assembly included in the battery module of FIG. 2. FIG. 7 is an exploded perspective view illustrating a center busbar assembly according to an embodiment of the present disclosure.

Referring to FIGS. 2, 6 and 7, the center busbar assembly 400 according to the present embodiment includes a plurality of center busbars 410; and a spacer 420 located between the center busbars 410 and occupying the space between the center busbars 410.

The battery cell stack 120 according to the present embodiment may include a plurality of the above-mentioned double cells 110dc, so that the center busbars 410 may also be disposed in a plurality of numbers. At this time, considering the thickness of the battery cell 110, a space may be formed between adjacent center busbars 410. If such a space is left as it is, the structural stability of the battery module 100 is impaired. Thus, in the present embodiment, a spacer 420 for stably supporting the center busbar 410 is disposed between adjacent center busbars 410. Such spacers 420 may also be disposed in a plurality of numbers. For convenience of explanation, only the center busbar 410 and spacers 420 are illustrated in FIGS. 6 and 7, but in the battery module 100, the center busbar 410 is in the state where electrode leads 111 and 112 of the battery cells 110 included in the first battery cell stack 120a and the electrode leads 111 and 112 of the battery cells 110 included in the second battery cell stack 120b are already joined. That is, two battery cells 110 are connected through the center busbar 410 to form a double cell 110dc, and a spacer 420 or a terminal spacer 520, which will be described later, may be disposed on one side of the center busbar 410 in the state where the electrode leads 111 and 112 are joined.

The spacer 420 preferably includes an electrically insulating material, and may be a plastic injection molding material by way of example. The shape of the spacer 420 is not particularly limited, and may be a member having a certain thickness so as to occupy the space between adjacent center busbars 410.

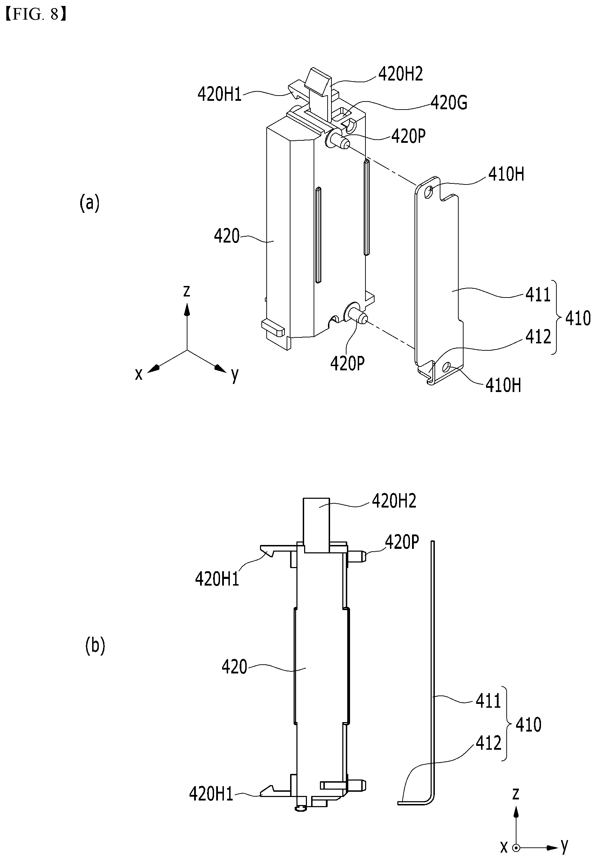

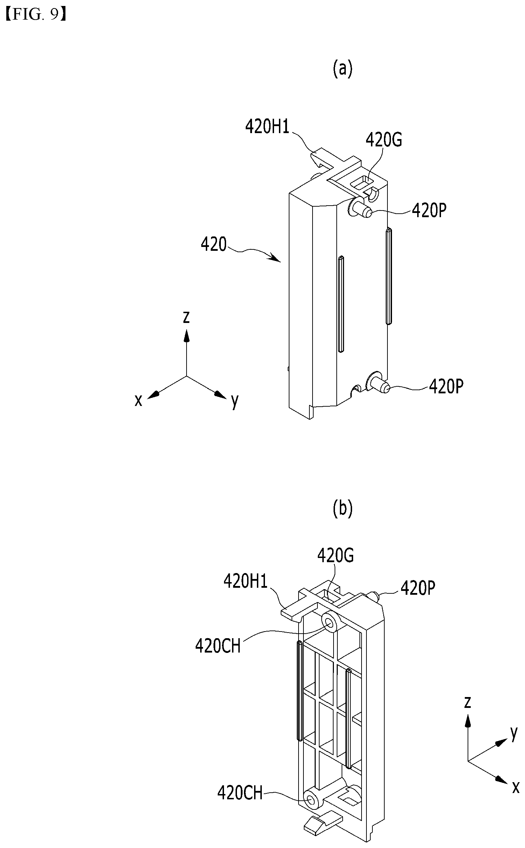

Next, the specific structure of the center busbar and spacer according to the present embodiment will be described in more detail with reference to FIGS. 8, 9, and the like.

FIGS. 8(a) and (b) are diagrams illustrating the center busbar and spacer included in the center busbar assembly of FIG. 7 at various angles. FIGS. 9(a) and (b) are diagrams illustrating the spacer included in the center busbar assembly of FIG. 7 at various angles.

Referring to FIGS. 5 to 9, as mentioned above, the center busbar assembly 400 may include a plurality of center busbars 410 and a plurality of spacers 420, and the center busbars 410 and spacers 420 to which the electrode leads 111 and 112 are joined may be alternately disposed along the stacking direction of the battery cells 110.

The center busbar 410 is a member for connecting the electrode leads 111 and 112, and preferably includes a conductive material such as a metal material. The center busbar 410 may include a first portion 411 that is connected to the electrode leads 111 and 112 of the battery cell 110 and a second portion 412 that extends from the first portion 411 and is connected to the circuit unit. The first portion 411 may have a plate shape for connecting and joining with the electrode leads 111 and 112. The second portion 412 may extend from the lower part of the first portion 411, and the second portion 412 may be bent so that one surface of the second portion 412 is perpendicular to one surface of the first portion 411. The connection between the second portion 412 and the circuit unit will be described again later.

As mentioned previously, the spacer 420 may be a member having a certain thickness so as to fill the space between the center busbars 410, wherein a protrusion 420P may be formed on one surface of the spacer 420, and a coupling hole 420CH may be formed on the other surface of the spacer 420, which is located opposite to the one surface. In FIG. 9(a), a protrusion 420P formed on one surface of the spacer 420 can be confirmed, and in FIG. 9(b), a coupling hole 420CH formed on the other surface of the spacer 420 can be confirmed.

At least one through hole 410H may be formed in the center busbar 410. The protrusion 420P of any one spacer 420, the through hole 410H of the center busbar 410, and the coupling hole 420CH of the other adjacent spacer 420 may be formed at positions corresponding to each other.

The protrusion 420P of any one spacer 420 may pass through the through hole 410H of the center busbar 410 and then be inserted into the coupling hole 420CH of the other spacer 420. The plurality of spacers 420 can be coupled to each other in such a manner that the protrusion 420P is inserted into the coupling hole 420CH in this way. At the same time, since the protrusion 420P passes through the through hole 410H of the center busbar 410, the center busbar 410 can be fixed to the spacers 420 between the spacers 420. When the center busbars 410 and spacers 420 are disposed alternately, the center busbars 410 and the spacers 420 can be firmly fixed through assembly of the protrusion 420P, the through hole 410H, and the coupling hole 420CH.

Further, the spacers 420 according to the present embodiment are disposed in a plurality of numbers, and the spacers 420 can be assembled by engaging with hooks. Specifically, the spacer 420 may include at least one first hook 420H1 protruding in one direction, and the spacer 420 may be formed with a hook groove 420G in which the first hook 420H1 is hooked. By way of example, first hooks 420H1 that protrude in the direction in which the other spacer 420 is located may be formed on the upper part and the lower part of the spacer 420, respectively. In corresponding thereto, hook grooves 420G having an indented shape may be formed in the upper surface and the lower surface of the spacer 420. In FIG. 8(a) and FIGS. 9(a) and (b), only the hook groove 420G formed on the upper surface of the spacer 420 is illustrated, but a hook groove having a similar indented shape may be formed on the lower surface of the spacer 420. The spacers 420 may be assembled together as the first hook 420H1 of the spacer 420 is fastened to the hook groove 420G of the other adjacent spacer 420. That is, in the case of the center busbar assembly 400 according to the present embodiment, a plurality of spacers 420 may be disposed, so that the spacers 420 can be firmly assembled through the hook engagement of the first hook 420H1 and the hook groove 420G, and the center busbar 410 located between them can also be stably fixed.

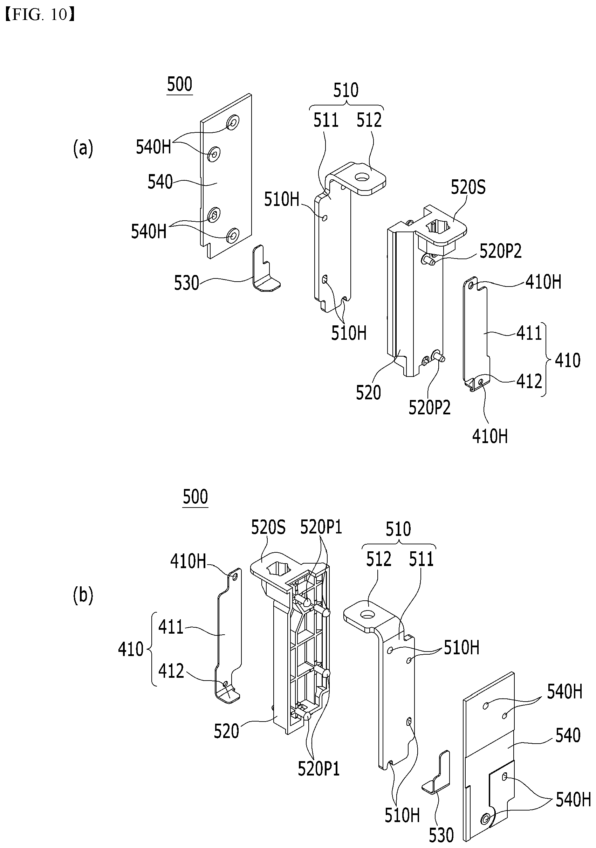

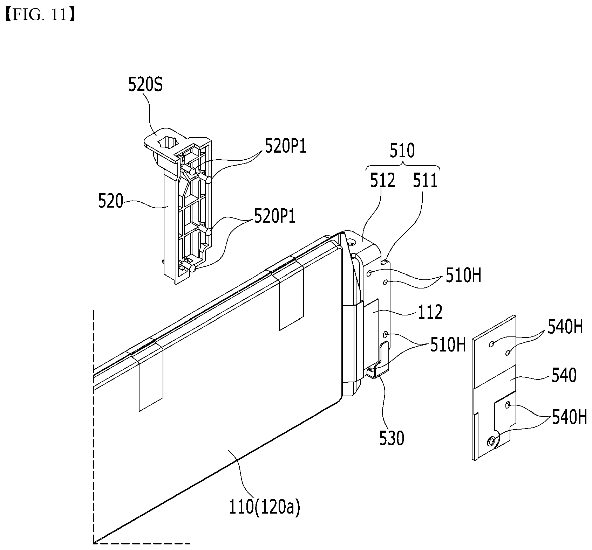

Next, the structure of the terminal busbar assembly according to the present embodiment will be described in detail with reference to FIGS. 10 and 11, and the like.

FIGS. 10(a) and (b) are exploded perspective views illustrating the terminal busbar assembly of FIG. 6. Specifically, each of the two terminal busbar assemblies 500 illustrated in FIG. 6 is illustrated in an exploded view in FIGS. 10 (a) and (b). FIG. 11 is an exploded perspective view for explaining a connection configuration between a terminal busbar assembly and one of the battery cells according to an embodiment of the present disclosure.

Referring to FIGS. 2, 6, 10 and 11 together, the battery module 100 according to the present embodiment may further include a pair of terminal busbar assemblies 500 respectively located at both ends of the center busbar assembly 400 between the first battery cell stack 120a and the second battery cell stack 120b. One of the pair of terminal busbar assemblies 500 is illustrated in FIG. 10(a), and the other one is illustrated in FIG. 10(b).

The terminal busbar assembly 500 may include a terminal busbar 510, wherein the terminal busbar 510 may include a first portion 511 connected to the electrode leads 111 and 112 of the battery cell 110, and a second portion 512 extending from the first portion 511 and exposed to the outside. Meanwhile, "external" as used herein refers to the outside based on the battery module 100. Further, the terminal busbar 510 preferably includes a conductive material such as a metal material.

The first portion 511 may have a plate shape for connecting and joining with the electrode leads 111 and 112. The second portion 512 may extend from the upper part of the first portion 511, and the second portion 512 may be bent so that one surface of the second portion 512 is perpendicular to one surface of the first portion 511. Compared to the center busbar 410 described above, the first portion 511 of the terminal busbar 510 and the first portion 411 of the center busbar 410 are similar to each other, but the difference is that the second portion 512 of the terminal busbar 510 is provided in the upper part of the first portion 511, while the second portion 412 of the center busbar 410 is provided in the lower part of the first portion 411.

The method of electrical connection between the electrode leads 111 and 112 and the first portion 511 of the terminal busbar 510 is not particularly limited, and welding and joining may be applied by way of example.

The second portion 512 of the terminal busbar 510 is a portion exposed to the outside of the battery module 100, and functions as an input/output terminal of the battery module 100 for HV (High Voltage) connection. The HV connection refers to an electrical connection that requires relatively high voltage, such as the input/output terminal of a battery module. The battery module 100 according to the present embodiment includes a battery disconnection unit (BDU) that controls electrical connection of other battery modules or battery modules through the second portion 512 of the terminal busbar 510. The battery module 100 according to the present embodiment can be connected with a battery disconnection unit (BDU) that controls an electrical connection of other battery modules or battery modules through the second portion 512 of the terminal busbar 510. In the present embodiment, the terminal busbar 510, which functions as an input/output terminal of the battery module 100, may be located between the first battery cell stack 120a and the second battery cell stack 120b.

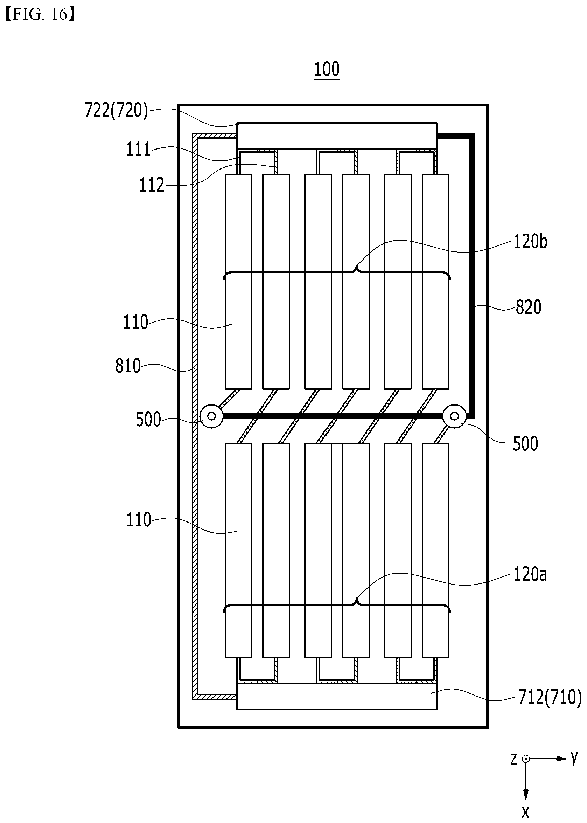

The electrode leads 111 and 112 of the battery cell 110 disposed on the outermost side in one direction of the first battery cell stack 120a are connected to a first portion 511 of the terminal busbar 510 included in one of the terminal busbar assemblies 500, and the electrode leads 111 and 112 of the battery cell 110 disposed on the outermost side in the other direction of the second battery cell stack 120b may be connected to the first portion 511 of the terminal busbar 510 included in the other one of the terminal busbar assemblies 500. By way of example, FIG. 11 illustrates a state where the anode lead 112 of the battery cell 110 disposed on the outermost side in one direction of the first battery cell stack 120a is connected to the first portion 511 of the terminal busbar 510 included in one of the terminal busbar assemblies 500. The terminal busbar 510 in FIG. 11 functions as an anode terminal of the battery module 100. At this time, the one direction and the other direction correspond to directions in which the battery cells 110 are stacked and are opposite to each other. The electrical connection path between the battery cells 110 or the electrical connection path between the battery cell 110 and the terminal busbar assembly will be described later with reference to FIG. 16.

On the other hand, the terminal busbar assembly 500 may further include a terminal spacer 520 facing one surface of the first portion 511 of the terminal busbar 510; and a terminal insulating plate 540 covering the other surface of the first portion 511 of the terminal busbar 510. The one surface and the other surface of the first portion 511 are opposite surfaces to each other, and in other words, the first portion 511 of the terminal busbar 510 may be located between the terminal spacer 520 and the terminal insulating plate 540.

The above-mentioned center busbar 410 may be located on one surface of the terminal spacer 520. Although not illustrated for convenience of explanation, the electrode leads 111 and 112 of the battery cell 110 are in the state of being joined to the center busbar 410. That is, as illustrated in FIG. 6, each of the two center busbars 410 located on the outermost side among the plurality of center busbars 410 may be located between the terminal spacer 520 and the spacer 420. On the other hand, as illustrated in FIG. 7, the remaining center busbars 410 excluding the two center busbars 410 located on the outermost side may be located between the spacers 420.

The terminal spacer 520 may occupy a space between the terminal busbar 510 and the center busbar 410, similarly to the spacer 420. The terminal busbar 510 and the center busbar 410 may be closely attached to the terminal spacer 520. The terminal spacer 520 preferably includes an electrically insulating material, and may be a plastic injection molding material by way of example. The shape of the terminal spacer 520 is not particularly limited, and it may be a member having a certain thickness so as to occupy the space between the terminal busbar 510 and the center busbar 410. The terminal spacer 520 may be formed with a support portion 520S on which the second portion 512 of the terminal busbar 510 is seated. The support portion 520S is a portion that supports the second portion 512 of the terminal busbar 510, and may have a space formed therein in which a nut is seated. A bolt and nut combination may be applied when the second portion 512 of the terminal busbar 510 is connected to an external conductor.

A first protrusion 520P1 may be formed on one surface of the terminal spacer 520, and a second protrusion 520P2 may be formed on the other surface of the terminal spacer 520. The one surface and the other surface of the terminal spacer 520 are opposite surface to each other, and the one surface of the terminal spacer 520 is a surface facing the terminal busbar 510, and the other surface of the terminal spacer 520 may be the surface facing the center busbar 410. The second protrusion 520P2 formed on the other surface of the terminal spacer 520 can be confirmed in FIG. 10(a), and the first protrusion 520P1 formed on one surface of the terminal spacer 520 can be confirmed in FIG. 10(b).

As mentioned above, the center busbar 410 may be formed with at least one through hole 410H, wherein the through hole 410H of the center busbar 410 and the second protrusion 520P2 of the terminal spacer 520 may be formed at positions corresponding to each other.

The second protrusion 520P2 of the terminal spacer 520 passes through the through hole 410H of the center busbar 410 located on the outermost side among the center busbars 410, and then can be inserted into the coupling hole 420CH (see FIG. 9(b)) of the spacer 420 located on the outermost side. In this way, the terminal spacer 520 can be coupled to the adjacent spacer 420 in such a way that the second protrusion 520P2 is inserted into the coupling hole 420CH. At the same time, since the second protrusion 520P2 passes through the through hole 410H of the center busbar 410 located on the outermost side, the center busbar 410 located on the outermost side may be fixed between the terminal spacer 520 and the spacer 420.

On the other hand, a through hole 510H may be formed in the first portion 511 of the terminal busbar 510, and a through hole 540H may be formed in the terminal insulating plate 540. The through hole 510H of the terminal busbar 510, the through hole 540H of the terminal insulating plate 540, and the first protrusion 520P1 of the terminal spacer 520 may be formed at positions corresponding to each other.

The first protrusion 520P1 of the terminal spacer 520 may pass through the through hole 510H of the terminal busbar 510 and then be inserted into the through hole 540H of the terminal insulating plate 540. In this way, the terminal insulating plate 540 may be coupled to the terminal spacer 520 in such a way that the first protrusion 520P1 is inserted into the through hole 540H of the terminal insulating plate 540. At the same time, since the first protrusion 520P1 passes through the through hole 510H of the terminal busbar 510, the terminal busbar 510 can be fixed between the terminal spacer 520 and the terminal insulation plate 540.

In particular, a portion having a large thickness is provided at the end of the first protrusion 520P1, so that the first protrusion 520P1 can be forcibly inserted into the through hole 540H of the terminal insulating plate 540. After being forcibly inserted, the thick portion can prevent the terminal insulating plate 540 from being separated.

Meanwhile, although not specifically shown, the terminal spacer 520 may be provided with a hook groove to which the first hook 420H1 (see FIG. 8 or 9) of the adjacent spacer 420 is coupled.

Taken together, the pair of terminal busbar assemblies 500 located at both ends of the center busbar assembly 400 can improve the ease of assembly between internal components by an assembling method using the first protrusion 520P1, and can be fixed to the center busbar assembly 400 by an assembling method using the second protrusion 520P2.

The terminal insulating plate 540 may be a plate-shaped member having an electrically insulating material. This terminal insulation plate 540 covers the other surface of the first portion 511 of the terminal busbar 510, and thereby performs the function of preventing the first portion 511 of the terminal busbar 510 from being exposed to the outside and causing a short circuit.

On the other hand, the terminal busbar assembly 500 may further include a connection busbar 530 connected to the first portion 511 of the terminal busbar 510. The connection busbar 530 preferably includes a conductive material such as a metal material. The connection busbar 530 may be connected to the lower part of the first portion 511 of the terminal busbar 510, and may include a portion bent to be perpendicular to one surface of the first portion 511 of the terminal busbar 510. The connection busbar 530 may perform a similar function to the second portion 412 of the center busbar 410 described above, and this point will be described again below.

Next, the advantages processed by the battery module according to the present embodiment will be explained in comparison with the battery module according to the comparative example of the present disclosure.

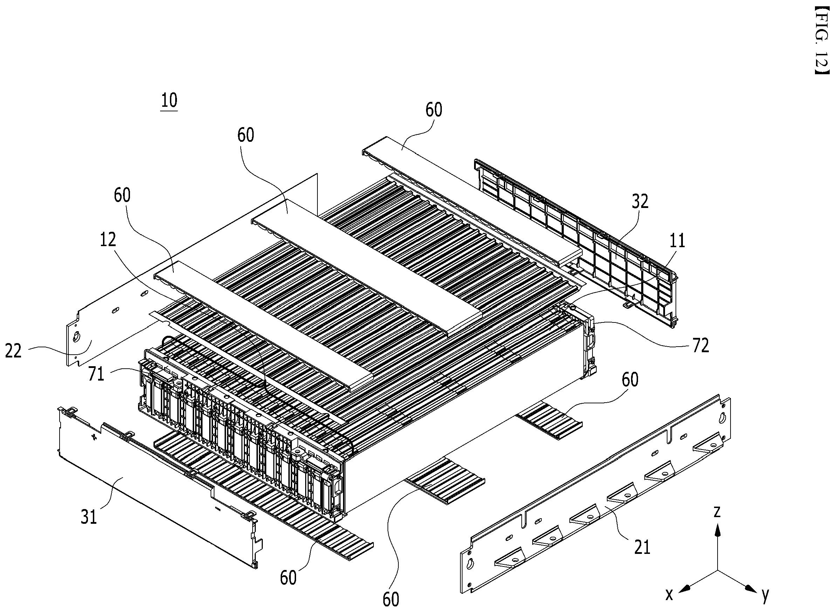

FIG. 12 is an exploded perspective view illustrating a battery module according to a comparative example of the present disclosure.

Referring to FIG. 12, the battery module 10 according to a comparative example of the present disclosure includes a battery cell stack 12 in which a plurality of battery cells 11 are stacked, first and second side plates 21 and 22 located on both side surfaces of the battery cell stack 12, and a connection member 60 disposed at the upper part and the lower part of the battery cell stack 120 and connecting the first and second side plates 21 and 22.

In the battery cell stack 12, the battery cells 11 are stacked along one direction, and electrode leads may protrude in a direction perpendicular to the direction in which the battery cells 11 are stacked. The first busbar frame 71 and the second busbar frame 72 may be disposed in the direction in which such electrode leads protrude. Busbars are mounted on each of the first busbar frame 71 and the second busbar frame 72, and such busbars can connect the electrode leads of the battery cells 11.

Further, the battery module 10 includes a first insulating plate 31 covering the first busbar frame 71, and a second insulating plate 32 covering the second busbar frame 72.

As shown in FIG. 12, the battery module 10 according to this comparative example corresponds to a single model battery module having one battery cell stack 12, and as shown in FIG. 2, the battery module 100 according to the present embodiment corresponds to a twin model battery module having a first battery cell stack 120a and a second battery cell stack 120b that are disposed along the longitudinal direction of the battery cell 110.

In order to realize the same battery capacity, two battery modules 10 according to this comparative example and one battery module 100 according to the present embodiment must be compared. When the two battery modules 10 are disposed on the front and rear sides along the longitudinal direction, two busbar frames 71 and 72 and two insulating plates 31 and 32 are located between the battery cell stack 12 of the battery module 10 disposed on the front side and the battery cell stack 12 of the battery module 10 disposed on the rear side. In other words, the second busbar frame 72 and the second insulating plate 32 of the battery module 10 disposed on the front side, and the first insulating plate 31 and the first busbar frame 71 of the battery module 10 disposed on the rear side are located between the battery cell stack 12 of the battery module 10 disposed on the front side and the battery cell stack 12 of the battery module 10 disposed on the rear side. That is, two busbar frames 71 and 72 and two insulating plates 31 and 32 are located between the two battery cell stacks 12, which thus have a configuration in which the space occupied in the longitudinal direction of the battery cell 11 increases and the number of parts increases.

On the other hand, in the case of the battery module 100 according to the present embodiment, only the center busbar assembly 400 and the terminal busbar assembly 500 are disposed between the first battery cell stack 120a and the second battery cell stack 120b. In the case of the terminal busbar assemblies 500, since they are located at both ends of the center busbar assembly 400, no additional space is required in the longitudinal direction of the battery cell 110. Further, in the case of the center busbar assembly 400, only a space corresponding to the thickness of the center busbar 410 or the spacer 420 is required in the longitudinal direction of the battery cell 110.

In other words, when two battery modules 10 according to this comparative example are disposed to realize the same capacity, more parts are required, and the space required in the longitudinal direction increases, which have the disadvantages in terms of energy density and space utilization. On the other hand, in the case of the battery module 100 according to the present embodiment, by disposing the center busbar assembly 400, the space required in the longitudinal direction can be significantly reduced compared to a single model battery module 10, even while electrically connecting the first battery cell stack 120a and the second battery cell stack 120b. That is, the battery module 100 according to the present embodiment has the advantage that the number of parts can be reduced, and the energy density or space utilization can be higher as the space required is smaller.

Furthermore, since each of the two battery modules 10 is provided with a terminal busbar, the HV connection configuration in battery pack units may become somewhat complicated. On the other hand, since the battery module 100 according to the present embodiment requires only a pair of terminal busbars 510 even if it is provided with the first and second battery cell stacks 120a and 120b, it has the advantage that the HV connection configuration in battery pack units is simplified and the number of parts can be reduced.

Below, the LV (Low Voltage) connection configuration of the battery module 100 according to the present embodiment will be described in detail. The LV connection refer to an electrical connection that requires relatively low voltage, such as battery electrical components. By way of example, the battery module 100 may be provided with a module connector (not shown) for sensing the voltage or temperature of the battery cells 110 included in the battery module 100. This module connector is connected to a battery management system (BMS) located outside the battery module 100, and transmits measured voltage or temperature data to the battery management system. The battery management system has a function of managing the voltage or temperature of the battery module 100 based on the transmitted voltage or temperature data.

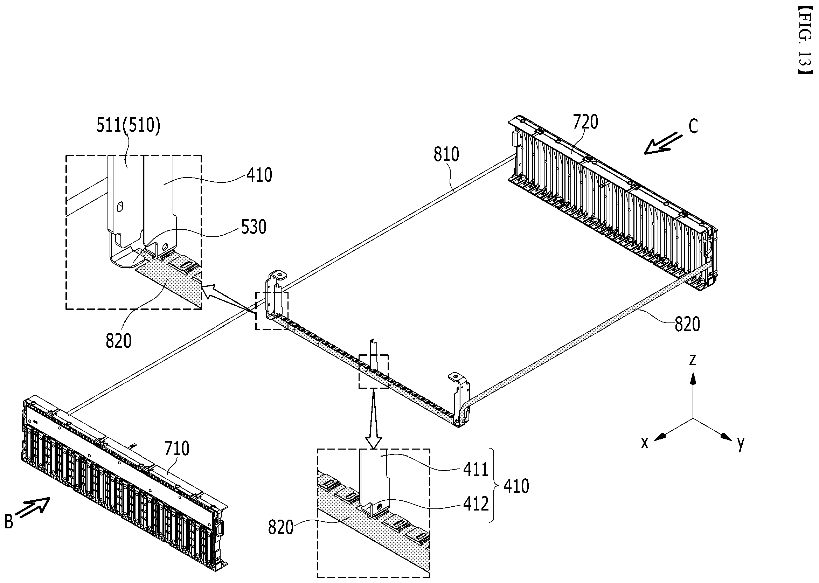

FIG. 13 is a perspective view illustrating a first external busbar frame, a second external busbar frame, a first circuit unit, and a second circuit unit according to an embodiment of the present disclosure.

Referring to FIGS. 2 and 13, the battery module 100 according to the present embodiment may further include a first external busbar frame 710 located on one side of the first battery cell stack 120a, and a second external busbar frame 720 located on one side of the second battery cell stack 120b.

On the basis of the first battery cell stack 120a, the first external busbar frame 710 may be located in a direction opposite to the direction in which the center busbar assembly 400 is located, and on the basis of the second battery cell stack 120b, the second external busbar frame 720 may be located in a direction opposite to the direction in which the center busbar assembly 400 is located. That is, the first external busbar frame 710, the first battery cell stack 120a, the center busbar assembly 400, the second battery cell stack 120b, and the second external busbar frame 720 may be sequentially located along the longitudinal direction (direction parallel to the x-axis) of the battery cell 110. Both the first external busbar frame 710 and the second external busbar frame 720 preferably include an electrically insulating material, and may include a plastic injection molding material by way of example.

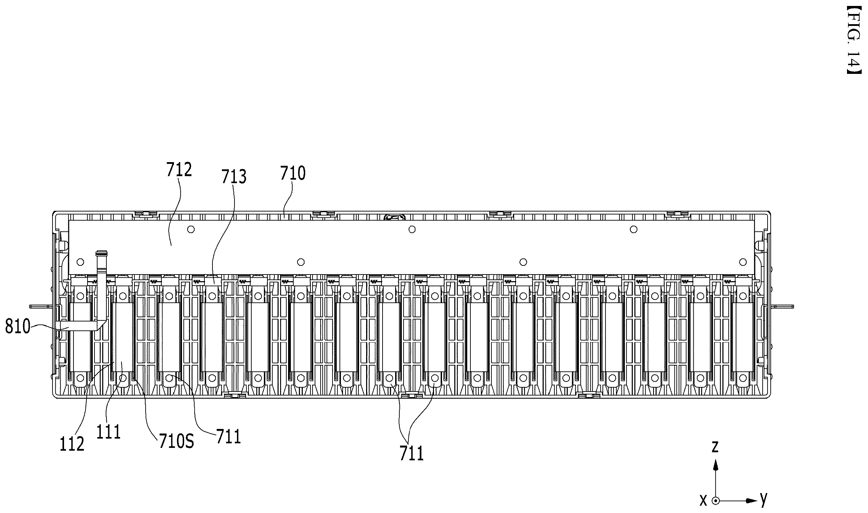

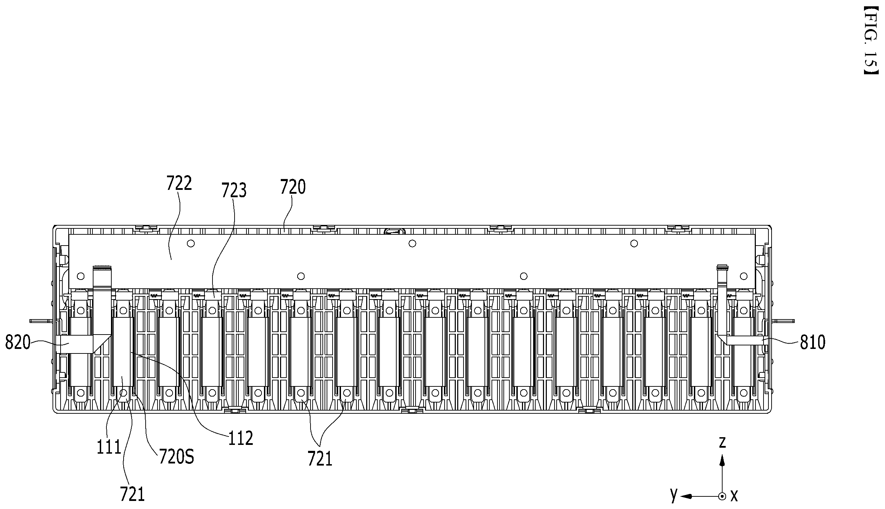

The first external busbar frame and the second external busbar frame will be described in detail with reference to FIGS. 14 and 15, and the like.

FIG. 14 is a front view of the first external busbar frame of FIG. 13 viewed from the "B" direction. FIG. 15 is a rear view of the second external busbar frame of FIG. 13 viewed from the "C" direction.

First, referring to FIGS. 2, 13, and 14, the electrode leads 111 and 112 protruding from the battery cells 110 included in the first battery cell stack 120a toward the first external busbar frame 710 may be connected to a first external busbar 711 mounted on a first external busbar frame 710. Specifically, in the first external busbar frame 710, the first external busbar 711 may be mounted to a surface opposite to the surface facing the first battery cell stack 120a. The first external busbar frame 710 is formed with a slit 710S, and the electrode leads 111 and 112 may pass through the slit 710S and then be bent to connect to the first external busbar 711. The connection method between the electrode leads 111 and 112 and the first external busbar 711 is not particularly limited, but welding and joining may be applied so as to enable electrical and physical connection.

Further, a first sensing unit 712 for voltage sensing may be mounted on the first external busbar frame 710. Specifically, in the first external busbar frame 710, the first sensing unit 712 can be mounted to a surface opposite to the surface facing the first battery cell stack 120a. The first sensing unit 712 may be a flexible printed circuit board (FPCB) or a flexible flat cable (FFC). The first sensing unit 712 may be connected to the first external busbar 711 through a first joining plate 713 provided at one end of the first sensing unit 712. Welding and joining may be applied to the connection method between the first joining plate 713 and the first external bus bar 711.

The first sensing unit 712 is connected to the battery cells 110 of the first battery cell stack 120a via the first joining plate 713 and the first external busbar 711, and voltage information of the battery cell 110 can be measured during charging and discharging. Although not specifically illustrated, the first sensing unit 712 is connected to the above-mentioned module connector, and can transmit voltage information to the module connector. Voltage information can be transmitted to a battery management system (BMS) located outside the battery module 100 through the module connector.

Next, referring to FIGS. 2, 13 and 15, the electrode leads 111 and 112 protruding from the battery cells 110 included in the second battery cell stack 120b toward the second external busbar frame 720 may be connected to the second external busbar 721 mounted on the second external busbar frame 720. Specifically, in the second external busbar frame 720, the second external busbar 721 can be mounted to a surface opposite to the surface facing the second battery cell stack 120b. The second external busbar frame 720 is formed with a slit 720S, and the electrode leads 111 and 112 may pass through the slit 710S and then be bent to connect to the second external busbar 721. The connection method between the electrode leads 111 and 112 and the second external busbar 721 is not particularly limited, but welding and joining may be applied so as to enable electrical and physical connection.

Further, a second sensing unit 722 for voltage sensing may be mounted on the second external busbar frame 720. Specifically, in the second external busbar frame 720, the second sensing unit 722 may be mounted to a surface opposite to the surface facing the second battery cell stack 120b. The second sensing unit 722 may be a flexible printed circuit board (FPCB) or a flexible flat cable (FFC). The second sensing unit 722 may be connected to the second external busbar 721 through a second joint plate 723 provided at one end thereof. Welding and joining may be applied to the connection method between the second joining plate 723 and the second external busbar 721.

The second sensing unit 722 is connected to the battery cells 110 of the second battery cell stack 120b via the second joining plate 723 and the second external busbar 721, and voltage information of the battery cell 110 can be measured during charging and discharging. Although not specifically illustrated, the second sensing unit 722 is connected to the above-mentioned module connector, and can transmit voltage information to the module connector. Voltage information can be transmitted to a battery management system (BMS) located outside the battery module 100 through the module connector.

On the other hand, referring again to FIGS. 13 to 15, the battery module 100 according to the present embodiment may further include circuit units 810 and 820. Specifically, the first circuit unit 810 is a member that continues along the side surface of the first and second battery cell stacks 120a and 120b (see FIG. 2) and connects the first sensing unit 712 and the second sensing unit 722, and may be a flexible printed circuit board (FPCB) or a flexible flat cable (FFC). The second circuit unit 820 is a member that connects at least one of the first sensing unit 712 or the second sensing unit 722 and the center busbar 410, and may also be a flexible printed circuit board (FPCB). Board) or a flexible flat cable (FFC). FIG. 13 illustrates a state where the second circuit unit 820 connects the second sensing unit 722 and the center busbar 410.

As mentioned previously, the center busbar 410 may include a first portion 411 connected to the electrode leads 111 and 112 of the battery cell 110 and a second portion 412 extending from the first part 411 and connected to the circuit unit, and one surface of the second portion 412 may be bent perpendicularly to one surface of the first portion 411. In FIG. 13, for convenience of explanation, only a few center busbars 410 of the center busbar assembly are illustrated, and only the terminal busbars 510 of the terminal busbar assembly are illustrated. The second circuit unit 820 may extend to the lower end of the center busbar assembly and be connected to the second portion 412 of the center busbar 410, and can also be connected to a connection busbar 530 connected to the terminal busbar 510. FIG. 15 illustrates a state where the second circuit unit 820 is connected to the second sensing unit 722.

The second portion 412 of the center busbar 410, and the connection busbar 530 connected to the first portion 511 of the terminal busbar 510 performs a similar function. The electrode leads 111 and 112 of the battery cells 110 included in the first and second battery cell stacks 120a and 120b may be connected to the second circuit unit 820 through the second portion 412 of the center busbar 410 or the connection busbar 530, and voltage information may be transmitted to the second sensing unit 722 through the second circuit unit 820. As mentioned previously, the second sensing unit 722 is connected to the above-mentioned module connector, and can transmit voltage information to the module connector, and voltage information can be transmitted to a battery management system (BMS) located outside the battery module 100 through the module connector.

FIG. 16 is a schematic diagram for explaining an HV connection configuration and an LV connection configuration in the battery module according to an embodiment of the present disclosure. In particular, FIG. 16 schematically illustrates a plan view of the battery module 100 viewed along the -z axis direction on the xy plane.

Referring to FIGS. 2 and 16 together, a pair of terminal busbar assemblies 500 are located between the first battery cell stack 120a and the second battery cell stack 120b. One of the pair of terminal busbar assemblies 500 may include a terminal busbar that functions as a cathode terminal, and the other of the pair of terminal busbar assemblies 500 may include a terminal busbar that functions as an anode terminal. From one terminal busbar assembly 500 to the other terminal busbar assembly 500 may be connected in series in such a way that the cathode lead 111 of the battery cell 110 is connected to the anode lead of the other battery cell 110. In particular, when the battery cells 110 of the first battery cell stack 120a and the battery cells 110 of the second battery cell stack 120b are connected, the double cell 110dc structure mentioned above is formed. FIG. 16 illustrates that five double cells 110dc are formed. In addition, a battery cell 110 disposed on the outermost side in one direction of the first battery cell stack 120a and connected to the terminal busbar assembly 500, and a battery cell 110 disposed on the outermost side of the second battery cell stack 120b in the other direction and connected to another terminal busbar assembly 500 are illustrated as not forming a double cell structure. That is, the battery cells 110 of the first battery cell stack 120a and the battery cells 110 of the second battery cell stack 120b are connected in series within the battery module 100 through the center busbar assembly, and ultimately, all battery cells 110 can realize a series connection.

On the other hand, as mentioned previously, the first circuit unit 810 continues along the side surfaces of the first and second battery cell stacks 120a and 120b, and may connect the first sensing unit 712 on the first external busbar frame 710 and the second sensing unit 722 on the second external busbar frame 720. Further, as mentioned previously, the second circuit unit 820 may connect at least one of the first sensing unit 712 or the second sensing unit 722 and the center busbar 410 (see FIG. 13).

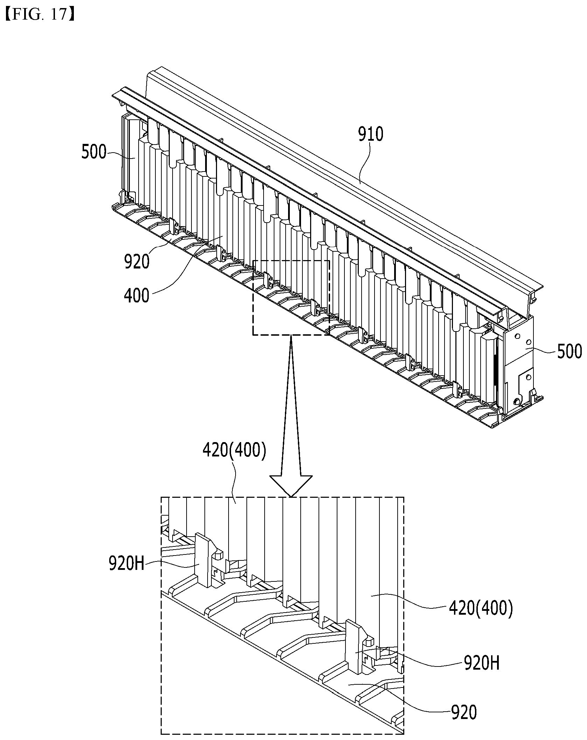

Next, the upper insulating member and the lower insulating member according to the present embodiment will be described in detail with reference to FIGS. 17 to 21, and the like.

FIG. 17 is a perspective view illustrating a center busbar assembly, an upper insulating member, and a lower insulating member according to an embodiment of the present disclosure. Although not illustrated in FIG. 2, referring to FIG. 17, the battery module 100 according to the present embodiment may further include an upper insulating member 910 located on an upper part of the center busbar assembly 400 and including an electrically insulating material, and a lower insulating member 920 located in a lower part of the center busbar assembly 400 and including an electrically insulating material. The upper insulating member 910 and the lower insulating member 920 cover an upper region and a lower region of the center busbar assembly 400, respectively, which thus prevents the center busbar assembly 400, the electrode leads 111, 112 and the like from being exposed to the outside and causing a short circuit.

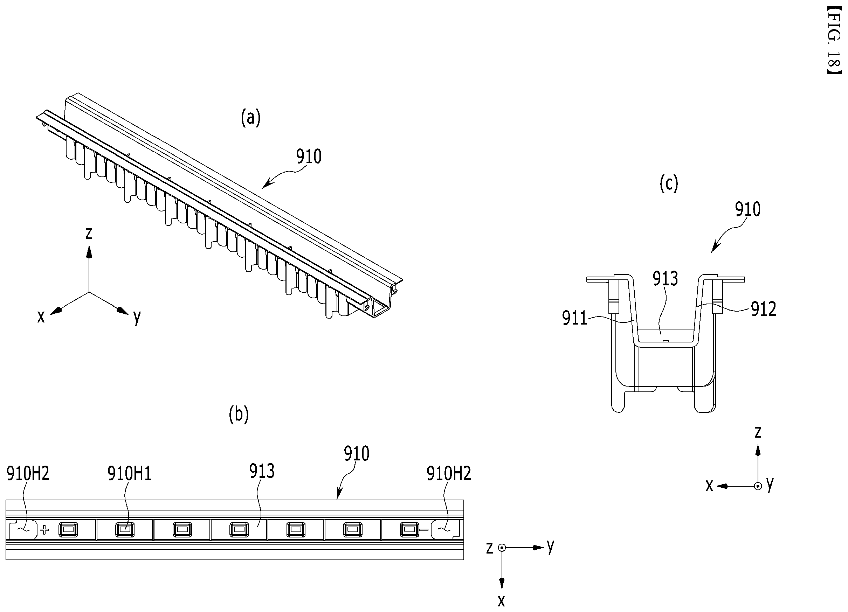

FIGS. 18 (a), (b) and (c) are diagrams illustrating the upper insulating member in FIG. 17 at various angles. Specifically, FIG. 18 (a) is a perspective view of the upper insulating member 910, FIG. 18(b) is a plan view of the upper insulating member 910 viewed along the -z axis direction in the xy plane, and FIG. 18(c) is a side view of the upper insulating member 910 viewed along the -y axis direction in the xz plane.

Referring to FIGS. 2, 17 and 18, the upper insulating member 910 may include a first wall portion 911 facing the first battery cell stack 120a; a second wall portion 912 facing the second battery cell stack 120b; and a bottom portion 913 connecting the first wall portion 911 and the second wall portion 912 and facing the center busbar assembly 400.

As illustrated in FIG. 18(b), when the upper insulating member 910 is viewed from the side surface, the first wall portion 911, the second wall portion 912, and the bottom portion 913 may have a U shape. The height of the center busbar assembly 400 may be lower than the height of the first battery cell stack 120a and the second battery cell stack 120b, and such a U-shape may be suitable for covering the upper region of the center busbar assembly 400 between the first battery cell stack 120a and the second battery cell stack 120b.

Referring to FIG. 18(C) together with FIGS. 10(a) and (b), the bottom portion 913 of the upper insulating member 910 may be formed with a fastening hole 910H1 and a terminal hole 910H2. First, the terminal hole 910H2 may be formed at a location corresponding to the second portion 512 of the terminal busbar 510. That is, the second portion 512 of the terminal busbar 510 is exposed to the outside through the terminal hole 910H2, and functions as an input/output terminal of the battery module 100.

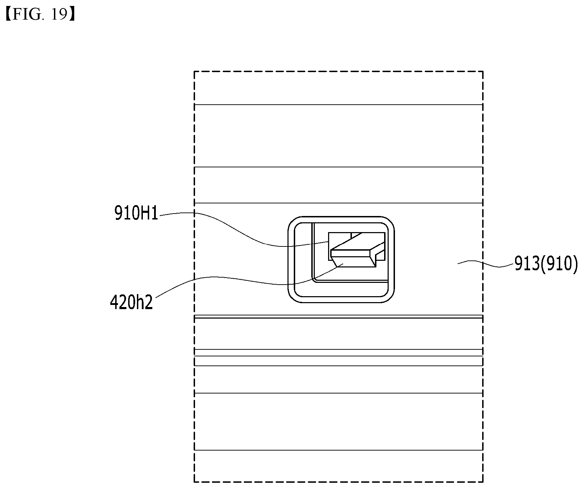

On the other hand, FIG. 19 is a partial diagram for explaining the connection configuration between the fastening hole of the upper insulating member and the second hook of the spacer.

Referring to FIG. 7, FIG. 8, FIG. 9, FIG. 18(b), and FIG. 19 together, the spacer 420 and the upper insulating member 910 according to the present embodiment can be assembled by engaging with hooks. That is, the spacer 420 and the upper insulating member 910 may be assembled by a mechanical fastening method.

By way of example, a second hook 420H2 protruding in the direction of the upper insulating member 910 may be formed on at least one of the spacers 420 according to the present embodiment. FIGS. 8 (a) and (b) illustrate a spacer 420 in which a second hook 420H2 is formed, and FIGS. 9 (a) and (b) illustrate a spacer 420 in which no second hook is formed.

A fastening hole 910H1 may be formed in the bottom portion 913 of the upper insulating member 910 corresponding to the second hook 420H2, and the second hook 420H2 protruding in the direction of the upper insulating member 910 may be fastened to the fastening hole 910H1.

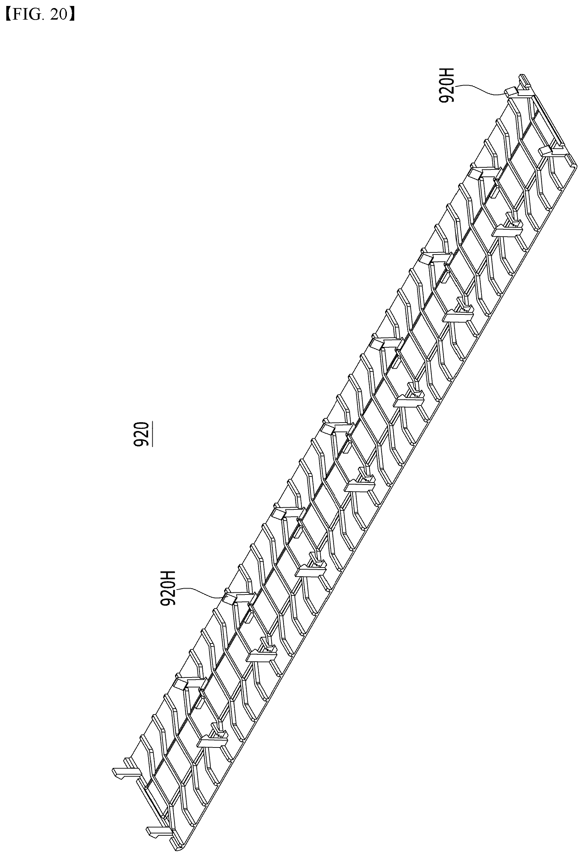

FIG. 20 is a perspective view illustrating the lower insulating member of FIG. 17.

Referring to FIGS. 17 and 20, the spacer 420 and the lower insulating member 920 according to the present embodiment can be assembled by engaging with hooks. That is, the spacer 420 and the lower insulating member 920 may be assembled by a mechanical fastening method.

By way of example, the lower insulating member 920 is a plate-shaped member, and may include a hook member 920H protruding in the upper direction. As illustrated in FIG. 17, a locking step may be formed in a portion of the spacer 420 corresponding to the hook member 920H, and the hook member 920H may be fastened onto this locking step.

Taken together, the upper insulating member 910 and the lower insulating member 920 according to the present embodiment can be fixed to the center busbar assembly 400 by a mechanical fastening method such as engaging with a hook, while being located at the upper part and the lower part of the center busbar assembly 400, respectively. Therefore, there is an advantage that the upper insulating member 910, the lower insulating member 920, and the center busbar assembly 400 can be assembled relatively easily compared to using a separate bolt and nut assembly method.

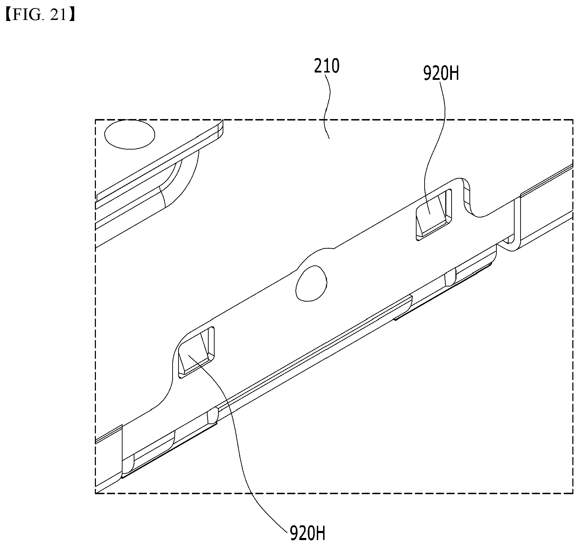

FIG. 21 is a partial diagram which enlarges and illustrates a section "A" of FIG. 1.

Referring to FIGS. 1, 20 and 21 together, the battery module 100 according to the present embodiment may include first and second side plates 210 and 220, which will be described below. At this time, a portion of the hook members 920H formed on the lower insulating member 920 may be fastened to the first and second side plates 210 and 220. That is, in order to improve the ease of assembly of the battery module, a hook engagement can also be applied between the first and second side plates 210 and 220 and the lower insulating member 920.

On the other hand, referring again to FIGS. 1 and 2, the battery module 100 according to the present embodiment may include first and second side plates 210 and 220 located on both sides of the battery cell stack 120; and a connection member 600 disposed at the upper part and the lower part of the battery cell stack 120 and connecting the first and second side plates 210 and 220.

The first side plate 210 and the second side plate 220 may be located on both sides of the battery cell stack 120, respectively, so as to support the battery cell stack 120. More specifically, the first side plate 210 and the second side plate 220 are located on both sides of the direction in which the plurality of battery cells 110 are stacked, that is, the direction parallel to the y-axis in FIG. 2. Further, the first side plate 210 may cover both one side surface of the first battery cell stack 120a and one side surface of the second battery cell stack 120b, and the second side plate 220 may cover both the other side surface of the first battery cell stack 120a and the other side surface of the second battery cell stack 120b.

On the other hand, the connection member 600 connecting the first side plate 210 and the second side plate 220 may be a metal band-shaped member. More specifically, the connection member 600 may have a configuration of a band including an elastic metal material.

On at least one of the upper side and the lower side of the battery cell stack 120, the connection members 600 may be provided in a singular or plural number. By way of example, the connection members 600 may be provided in a plural number on at least one of the upper side and the lower side of the battery cell stack 120. FIG. 2 illustrates that a plurality of connection members 600 are provided on both the upper side and the lower side of the battery cell stack 120. Such connection members 600 may be spaced apart from each other at regular intervals and may be located at the upper part and the lower part of the battery cell stack 120, respectively. By way of example, FIG. 2 illustrates that six connection members 600 are disposed on the upper side and the lower side of the battery cell stack 120, respectively.

Since the connection member 600 is a member that connects the first side plate 210 and the second side plate 220 as described above, it may have a configuration that continues along the direction from the first side plate 210 to the second side plate 220, that is, along the stacking direction of the battery cells 110. In other words, the connection member 600 extends along a direction parallel to the y-axis direction, so that one end may be connected to the first side plate 210, and the other end may be connected to the second side plate 220. This connection member 600 may be fixed to the first side plate 210 and the second side plate 220 by welding and joining.

On the other hand, the battery module 100 according to the present embodiment may further include a first external insulating plate 310 covering the first external busbar frame 710, and a second external insulating plate 320 covering the second external busbar frame 720.

The first external insulating plate 310 and the second external insulating plate 320 preferably include an electrically insulating material. The first external insulating plate 310 and the second external insulating plate 320 are disposed so as to prevent the electrical components mounted on the first external busbar frame 710 and the electrical components mounted on the second external busbar frame 720 from being exposed to the outside and causing a short circuit. The first external insulating plate 310 and the second external insulating plate 320 may be coupled to the first side plate 210 and the second side plate 220 by fastening bolts and nuts.

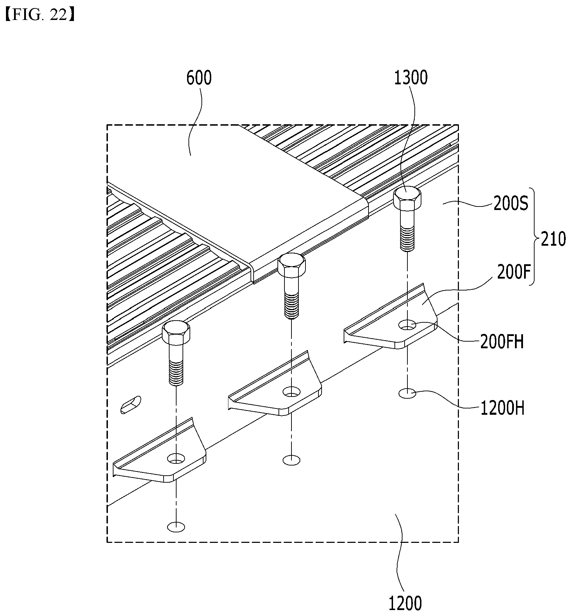

FIG. 22 is a partial diagram which enlargers and illustrates a state where a battery module according to an embodiment of the present disclosure is fixed to a mounting beam.

Referring to FIGS. 2 and 22 together, when the battery module 100 according to the present embodiment is mounted on a pack tray, it can be fixed to an adjacent mounting beam 1200. Specifically, when the battery module 100 is mounted on the pack tray, mounting beams 1200 may be located on both side surfaces of the battery module 100.

The first side plate 210 and the second side plate 220 according to the present embodiment may include a support portion 200S that supports the outermost battery cell of the battery cell stack 120, and a fixing portion 200F that protrudes in a direction perpendicular to one surface of the support portion 200S. A fixing portion 200F may be formed on the side of both the first side plate 210 and the second side plate 220 opposite to the direction in which the battery cell stack is located. The fixing portion 200F may be formed with a fixing hole 200FH for mounting and fixing. The number of fixing portions 200F are not particularly limited, and they may be provided in a singular or plural number.

In order to cope with external vibration or shock, mounting and fixing are required to fix the battery module 100 to a pack tray. The first side plate 210 and the second side plate 220 of the battery module 100 according to the present embodiment may be fixed to the mounting beam 1200 disposed on the pack tray. The mounting beam 1200, which has a shape that extends along one direction, can fix the battery module 100 and buffer shocks transmitted to the battery module 100 from external shocks, and the like.

With respect to the height direction, the fixing part 200F may be located higher than the height of the mounting beam 1200. The fixing portion 200F may be fixed to the upper surface of the mounting beam 1200, and as illustrated in FIG. 21, bolt coupling may be performed. That is, a mounting hole 1200H with a thread formed on the inside may be formed on the upper surface of the mounting beam 1200, and the bolt-shaped fastening member 1300 may pass through the fixing hole 200FH of the fixing part 200F and then be inserted and fastened into the mounting hole 1200H.

In the battery cells 110, a phenomenon in which the internal electrolyte decomposes during repeated charging and discharging, gas is generated and the battery cell 110 swells, that is, a swelling phenomenon, may occur. If such swelling of the battery cell 110 cannot be controlled, it may cause structural deformation of the battery module 100 in which a plurality of battery cells 110 are stacked, and may also adversely affect the durability and performance of the battery module 100.

Particularly, in recent years, pure Si cells, all-solid-state batteries, and high-SiO content cells are used as battery cells to produce high-capacity battery modules and battery packs. In the case of the cells, however, the degree of swelling is greater. In other words, in order to produce high-capacity battery modules and battery packs, it is essential to effectively control the swelling of the battery cells 110 inside the battery module or battery pack. Referring again to FIG. 2, since the pouch-type battery cells 110 usually have a large degree of swelling in the thickness direction, the structure directly related to swelling control is a first side plate 210 and a second side plate 220 disposed on both sides of the battery cell stack 120.

At this time, while the first side plate 210 and the second side plate 220 are directly coupled and fixed to the mounting beam 1200 on the pack tray, a mounting beam 1200 is designed to laterally support the first side plate 210 or the second side plate 220 and control swelling. That is, the mounting and fixing are performed through the first side plate 210 and the second side plate 220, and at the same time, the mounting beam 1200 can be designed such that it can supplement the rigidity and durability of the battery module 100 for swelling control.

On the other hand, the battery module 100 shown in FIG. 2 has a configuration in which the battery cell stack 120 is disposed in an internal space formed by the first and second side plates 210 and 220, the first and second external insulating plates 310 and 320, and the connection member 600, but this is an exemplary structure. Although not specifically illustrated, a battery module in which the battery cell stack 120 is housed in a housing with an internal space and then sealed by joining an end plate to the housing can also be used.

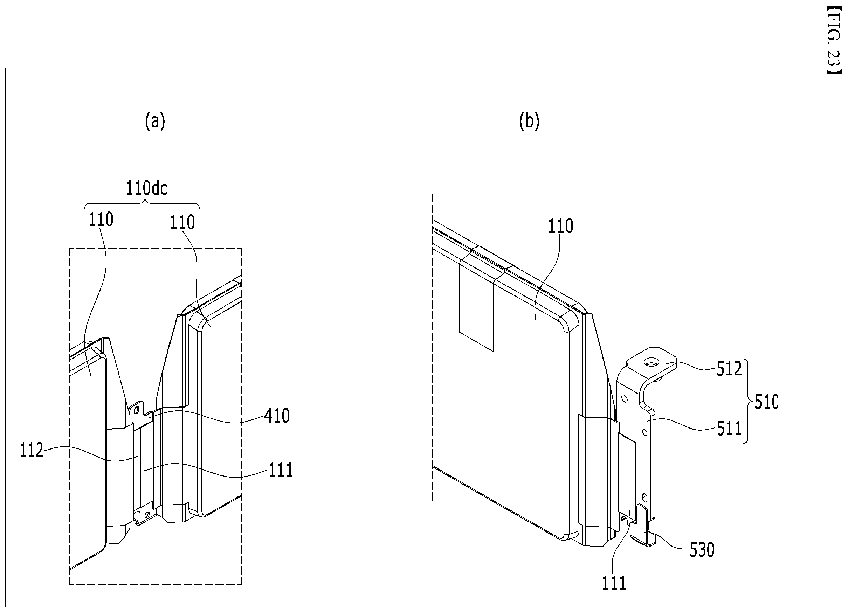

Next, the process of producing the battery module according to the present embodiment is described with reference to FIGS. 23 to 25.

FIGS. 23 (a) and (b) are partial diagrams illustrating a connection configuration between the battery cell and the center busbar and a connection configuration between the battery cell and the terminal busbar, respectively.

First, referring to FIG. 23(a), the electrode leads 111 and 112 of the two battery cells 110 are connected via the center busbar 410 to form a double cell 110dc structure. The anode lead 112 of any one battery cell 110 and the cathode lead 111 of any one battery cell 110 may be welded and joined to the center busbar 410. Such double cell 110dc structures are formed in a plural numbers.

Further, referring to FIG. 23(b), the electrode lead 111 of one battery cell 110 is welded and joined to the first portion 511 of the terminal busbar 510. Two battery cells 110 joined to the terminal bus bar 510 are provided. The second portion 512 of the two terminal busbars 510 functions as an input/output terminal for HV connection of the battery module 100.

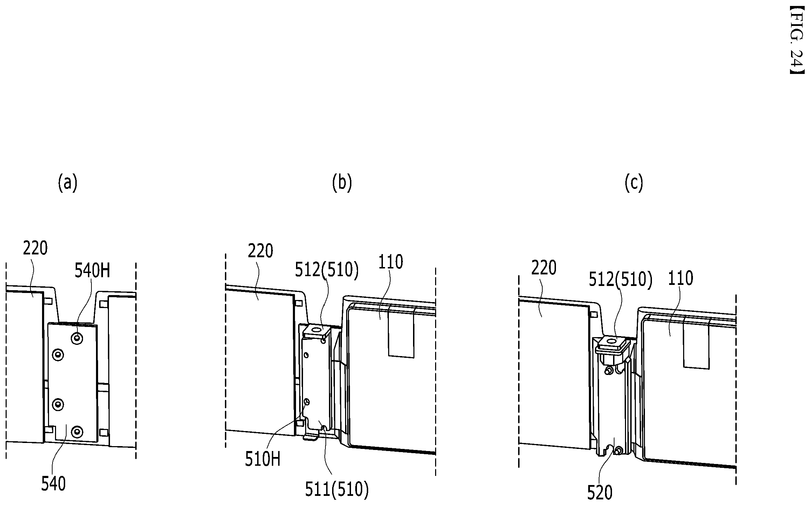

FIGS. 24 (a), (b) and (c) are partial diagrams for explaining the process of assembling a terminal busbar and a terminal spacer.

Referring to FIGS. 24 (a) to (c) together with FIG. 23(b), a terminal insulating plate 540 may be disposed on the second side plate 220. Subsequently, one battery cell 110 joined to the terminal busbar 510 produced in FIG. 23(b) can be disposed on one side of the terminal insulating plate 540 and the second side plate 220. At this time, the terminal busbar 510 is placed on the terminal insulating plate 540, and the through hole 540H of the terminal insulating plate 540 and the through hole 510H of the terminal bus bar 510 are located so as to correspond to each other.

Next, the terminal spacer 520 can be disposed on a surface opposite to the surface where the terminal busbar 510 faces the terminal insulating plate 540. At this time, as described in FIGS. 10 and 11, the first protrusion 520P1 of the terminal spacer 520 passes through the through hole 510H of the terminal busbar 510, and then can be inserted into the through hole 540H of the terminal insulating plate 540. The terminal busbar 510 may be fixed between the terminal spacer 520 and the terminal insulating plate 540.

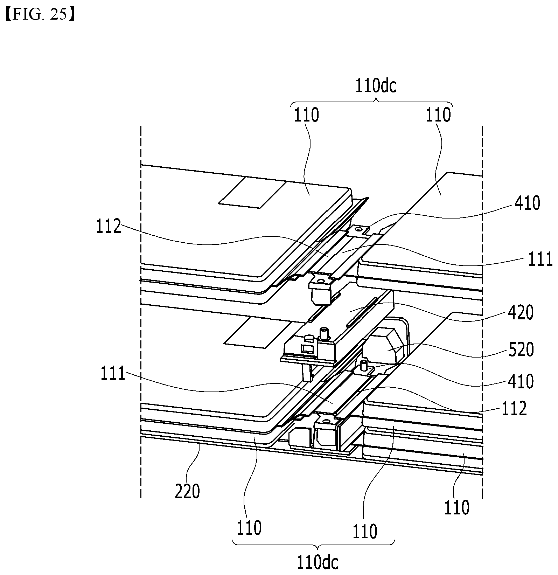

FIG. 25 is a partial diagram for explaining the process of stacking double cells.

Referring to FIG. 25 together with FIG. 24(c), one double cell 110dc can be disposed so that the center busbar 410 to which the electrode leads 111 and 112 are joined is placed on the terminal spacer 520 in FIG. 24(c).

Then, one spacer 420 can be disposed on the center busbar 410 to which the electrode leads 111 and 112 are joined, and the other double cell 110dc can be disposed so that the center busbar 410 to which the electrode leads 111 and 112 are joined is placed on the spacer 420. In this way, the spacers 420 and the double cells 110dc can be disposed alternately. At this time, as explained in FIGS. 7 to 9, the protrusion 420P of the spacer 420 may pass through the through hole 410H of the center busbar 410 and then be inserted into the coupling hole 420CH of another spacer 420. Further, the spacers 420 may be assembled together as the first hook 420H1 of the spacer 420 is fastened to the hook groove 420G of another adjacent spacer 420.

The spacers 420 and the double cells 110dc are disposed alternately, and then the terminal spacers 520 are disposed. The other battery cell 110 joined to the terminal busbar 510 can be disposed on the terminal spacer 520, and finally the terminal insulating plate 540 and the first side plate 210 can be disposed. As a result, it is possible to finally produce a structure in which the first battery cell stack 120a, the second battery cell stack 120b, the center busbar assembly 400, and the first and second side plates 210 and 220 shown in FIG. 2 are assembled.

Then, referring to FIGS. 2 and 13, a first external busbar frame 710 may be disposed on one side of the first battery cell stack 120a, a second external busbar frame 720 can be disposed on one side of the second battery cell stack 120b, and the circuit units 810 and 820 can be connected. Next, referring to FIGS. 17 to 20, an upper insulating member 910 and a lower insulating member 920 can be assembled above and below the center busbar assembly 400, respectively. Finally, referring again to FIG. 2, the first side plate 210 and the second side plate 220 are connected to the connection member 600, and the first external insulating plate 310 and the second external insulating plate 320 may be coupled to the first side plate 210 and the second side plate 220 by fastening bolts and nuts.

The battery module 100 according to the present embodiment can be produced by the series of methods described above. Meanwhile, the first and second side plates 210 and 220 and the connection member 600 coupled thereto have a configuration according to an embodiment of the battery module 100. Although not specifically illustrated, other configurations such as a mono frame, a combination structure of a U-shaped frame and an upper cover, and a structure in which four plates are combined are all possible.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS (battery management system), a BDU(battery disconnect unit), and a cooling system to form a battery pack.

The battery module or the battery pack can be applied to various devices. Specifically, it can be applied to vehicle means such as an electric bike, an electric vehicle, and a hybrid electric vehicle, or an ESS (Energy Storage System) and may be applied to various devices capable of using a secondary battery, without being limited thereto.

### [Description of Reference Numerals]

100: battery module
110: battery cell
110dc: double cell
120: battery cell stack
120a: first battery cell stack
120b: second battery cell stack
210: first side plate
220: second side plate
310: first external insulating plate
320: second external insulating plate
400: center busbar assembly
410: center busbar
420: spacer
500: terminal busbar assembly
510: terminal busbar
520: terminal spacer
530: connection busbar
540: terminal insulating plate

## Claims

1. A battery module (100) comprising:
a battery cell stack (120) including a first battery cell stack (120a) and a second battery cell stack (120b) in which a plurality of battery cells (110) are stacked; and
a center busbar assembly (400) located between the first battery cell stack and the second battery cell stack,
wherein any one battery cell included in the first battery cell stack and any one battery cell included in the second battery cell stack are electrically connected through a center busbar (410) included in the center busbar assembly to form a double cell structure (110dc),
**characterised in that** the first battery cell stack and the second battery cell stack are disposed along a direction perpendicular to the direction in which the battery cells in the first battery cell stack or the second battery cell stack are stacked,
wherein the battery cell stack includes a plurality of double cell structures and
wherein the center busbar is disposed in a plurality of center busbars.

2. The battery module according to claim 1, wherein:
the battery cells are pouch cells and include electrode leads (111, 112) protruding in both directions, and
the electrode lead of any one battery cell included in the first battery cell stack and the electrode lead of any one battery cell included in the second battery cell stack are electrically connected via the center busbar to form a double cell structure.

3. The battery module according to claim 2, wherein:
the electrode lead of any one battery cell included in the first battery cell stack and the electrode lead of any one battery cell included in the second battery cell stack are welded and joined to the center busbar.

4. The battery module according to claim 1, wherein:
the center busbar assembly further comprises a spacer (420) located between the center busbars and occupying the space between the center busbars.

5. The battery module according to claim 4, wherein:
the spacer is disposed in a plurality of numbers,
a protrusion (420P) and a coupling hole (420CH) are respectively formed on one surface and the other surface of the spacer,
a through hole (410H) is formed in the center busbar, and
the protrusion of one spacer passes through the through hole of the center busbar and is then inserted into the coupling hole of the other spacer.

6. The battery module according to claim 4, wherein:
the spacers are disposed in a plurality of numbers, and
the spacers are assembled by engaging with hooks (420H1).

7. The battery module according to claim 1,
further comprising a pair of terminal busbar assemblies (500) located at both ends of the center busbar assembly between the first battery cell stack and the second battery cell stack,
wherein the terminal busbar assembly includes a terminal busbar (510), and
wherein the terminal busbar includes a first portion (511) connected to the electrode lead of the battery cell, and a second portion (512) extending from the first portion and exposed to the outside.

8. The battery module according to claim 7, wherein:
the electrode lead of the battery cell disposed on the outermost side in one direction of the first battery cell stack is connected to the first portion of the terminal busbar included in any one of the terminal busbar assemblies, and
the electrode lead of the battery cell disposed on the outermost side in the other direction of the second battery cell stack is connected to the first portion of the terminal busbar included in the other one of the terminal busbar assemblies.

9. The battery module according to claim 7, wherein:
the terminal busbar assembly further comprises a terminal spacer (520) that faces one surface of the first portion of the terminal busbar; and a terminal insulation plate (540) that covers the other surface of the first portion of the terminal busbar.

10. The battery module according to claim 1,
further comprising a first external busbar frame (710) located on one side of the first battery cell stack, and a second external busbar frame (720) located on one side of the second battery cell stack,
wherein the electrode lead protruding from the battery cells included in the first battery cell stack toward the first external busbar frame is connected to a first external busbar (711) mounted on the first external busbar frame, and
wherein the electrode lead protruding from the battery cells included in the second battery cell stack toward the second external busbar frame is connected to a second external busbar (721) mounted on the second external busbar frame,
on the basis of the first battery cell stack, the first external busbar frame is located in a direction opposite to the direction in which the center busbar assembly is located, and
on the basis of the second battery cell stack, the second external busbar frame is located in a direction opposite to the direction in which the center busbar assembly is located.

11. The battery module according to claim 10, wherein:
a first sensing unit (712) and a second sensing unit (722) for voltage sensing are mounted on each of the first external busbar frame and the second external busbar frame, and
a circuit unit (810, 820) connects at least one of the first sensing unit or the second sensing unit and the center busbar.

12. The battery module according to claim 11, wherein:
the center busbar includes a first portion (411) connected to the electrode lead of the battery cell; and a second portion (412) extending from the first portion and connected to the circuit unit, and
the circuit unit extends to the lower end of the center busbar assembly and is connected to the second portion of the center busbar.

13. The battery module according to claim 1,
further comprising an upper insulating member (910) located in an upper part of the center busbar assembly and including an electrically insulating material,
the center busbar is disposed in a plurality of numbers,
the center busbar assembly further comprises a spacer located between the center busbars and occupying the space between the center busbars, and
the spacer and the upper insulating member are assembled by engaging with hooks..

14. The battery module according to claim 13, wherein:
the upper insulating member includes a first wall portion (911) facing the first battery cell stack; a second wall portion (912) facing the second battery cell stack; and a bottom portion (913) connecting the first wall portion and the second wall portion and facing the center busbar assembly.

15. The battery module according to claim 1,
further comprising a lower insulating member (920) located in a lower part of the center busbar assembly and including an electrically insulating material,
the center busbar is disposed in a plurality of numbers,
the center busbar assembly further comprises a spacer located between the center busbars and occupying the space between the center busbars, and
the spacer and the lower insulating member are assembled by engaging with hooks (920H).

## Patentansprüche

1. Batteriemodul (100), umfassend:
einen Batteriezellenstapel (120), der einen ersten Batteriezellenstapel (120a) und einen zweiten Batteriezellenstapel (120b) einschließt, in dem eine Vielzahl von Batteriezellen (110) gestapelt sind; und
eine zentrale Sammelschienenanordnung (400), die zwischen dem ersten Batteriezellenstapel und dem zweiten Batteriezellenstapel angeordnet ist,
wobei eine beliebige Batteriezelle, die in dem ersten Batteriezellenstapel enthalten ist, und eine beliebige Batteriezelle, die in dem zweiten Batteriezellenstapel enthalten ist, durch eine zentrale Sammelschiene (410), die in der zentralen Sammelschienenanordnung enthalten ist, elektrisch verbunden sind, um eine Doppelzellenstruktur (110dc) zu bilden,
**dadurch gekennzeichnet, dass** der erste Batteriezellenstapel und der zweite Batteriezellenstapel entlang einer Richtung senkrecht zu der Richtung angeordnet sind, in der die Batteriezellen in dem ersten Batteriezellenstapel oder dem zweiten Batteriezellenstapel gestapelt sind,
wobei der Batteriezellenstapel eine Vielzahl von Doppelzellenstrukturen einschließt und
wobei die zentrale Sammelschiene in einer Vielzahl von zentralen Sammelschienen angeordnet ist.

2. Batteriemodul nach Anspruch 1, wobei:
die Batteriezellen Pouch-Zellen sind und Elektrodenableiter (111, 112) einschließen, die in beide Richtungen vorstehen, und
der Elektrodenableiter einer beliebigen Batteriezelle, die in dem ersten Batteriezellenstapel enthalten ist, und der Elektrodenableiter einer beliebigen Batteriezelle, die in dem zweiten Batteriezellenstapel enthalten ist, über die zentrale Sammelschiene elektrisch verbunden sind, um eine Doppelzellenstruktur zu bilden.

3. Batteriemodul nach Anspruch 2, wobei:
der Elektrodenableiter einer beliebigen Batteriezelle, die in dem ersten Batteriezellenstapel enthalten ist, und der Elektrodenableiter einer beliebigen Batteriezelle, die in dem zweiten Batteriezellenstapel enthalten ist, an die zentrale Sammelschiene geschweißt und mit dieser verbunden sind.

4. Batteriemodul nach Anspruch 1, wobei:
die zentrale Sammelschienenanordnung ferner einen Abstandshalter (420) umfasst, der zwischen den zentralen Sammelschienen angeordnet ist und den Raum zwischen den zentralen Sammelschienen einnimmt.

5. Batteriemodul nach Anspruch 4, wobei:
der Abstandshalter in einer Vielzahl von Anzahlen angeordnet ist,
ein Vorsprung (420P) und ein Kopplungsloch (420CH) jeweils auf einer Oberfläche und der anderen Oberfläche des Abstandshalters ausgebildet sind,
ein Durchgangsloch (410H) in der zentralen Sammelschiene ausgebildet ist, und
der Vorsprung eines Abstandshalters durch das Durchgangsloch der zentralen Sammelschiene hindurchgeht und dann in das Kopplungsloch des anderen Abstandshalters eingeführt wird.

6. Batteriemodul nach Anspruch 4, wobei:
die Abstandshalter in einer Vielzahl von Anzahlen angeordnet sind, und
die Abstandshalter durch Eingriff mit Haken (420H1) zusammengebaut sind.

7. Batteriemodul nach Anspruch 1,
ferner umfassend ein Paar von Anschluss-Sammelschienenanordnungen (500), die an beiden Enden der zentralen Sammelschienenanordnung zwischen dem ersten Batteriezellenstapel und dem zweiten Batteriezellenstapel angeordnet sind,
wobei die Anschluss-Sammelschienenanordnung eine Anschluss-Sammelschiene (510) einschließt, und
wobei die Anschluss-Sammelschiene einen ersten Abschnitt (511), der mit dem Elektrodenableiter der Batteriezelle verbunden ist, und einen zweiten Abschnitt (512), der sich von dem ersten Abschnitt erstreckt und nach außen freigelegt ist, einschließt.

8. Batteriemodul nach Anspruch 7, wobei:
der Elektrodenableiter der Batteriezelle, die auf der äußersten Seite in einer Richtung des ersten Batteriezellenstapels angeordnet ist, mit dem ersten Abschnitt der Anschluss-Sammelschiene verbunden ist, die in einer der Anschluss-Sammelschienenanordnungen enthalten ist, und
der Elektrodenableiter der Batteriezelle, die auf der äußersten Seite in der anderen Richtung des zweiten Batteriezellenstapels angeordnet ist, mit dem ersten Abschnitt der Anschluss-Sammelschiene verbunden ist, die in der anderen der Anschluss-Sammelschienenanordnungen enthalten ist.

9. Batteriemodul nach Anspruch 7, wobei:
die Anschluss-Sammelschienenanordnung ferner einen Anschluss-Abstandshalter (520), der einer Oberfläche des ersten Abschnitts der Anschluss-Sammelschiene zugewandt ist; und eine Anschluss-Isolierplatte (540), die die andere Oberfläche des ersten Abschnitts der Anschluss-Sammelschiene abdeckt, umfasst.

10. Batteriemodul nach Anspruch 1,
ferner umfassend einen ersten äußeren Sammelschienenrahmen (710), der auf einer Seite des ersten Batteriezellenstapels angeordnet ist, und einen zweiten äußeren Sammelschienenrahmen (720), der auf einer Seite des zweiten Batteriezellenstapels angeordnet ist,
wobei der Elektrodenableiter, der von den Batteriezellen, die in dem ersten Batteriezellenstapel enthalten sind, in Richtung des ersten äußeren Sammelschienenrahmens vorsteht, mit einer ersten äußeren Sammelschiene (711) verbunden ist, die an dem ersten äußeren Sammelschienenrahmen montiert ist, und
wobei der Elektrodenableiter, der von den Batteriezellen, die in dem zweiten Batteriezellenstapel enthalten sind, in Richtung des zweiten äußeren Sammelschienenrahmens vorsteht, mit einer zweiten äußeren Sammelschiene (721) verbunden ist, die an dem zweiten äußeren Sammelschienenrahmen montiert ist,
auf der Basis des ersten Batteriezellenstapels der erste äußere Sammelschienenrahmen in einer Richtung entgegengesetzt zu der Richtung angeordnet ist, in der die zentrale Sammelschienenanordnung angeordnet ist, und
auf der Basis des zweiten Batteriezellenstapels der zweite äußere Sammelschienenrahmen in einer Richtung entgegengesetzt zu der Richtung angeordnet ist, in der die zentrale Sammelschienenanordnung angeordnet ist.

11. Batteriemodul nach Anspruch 10, wobei:
eine erste Sensoreinheit (712) und eine zweite Sensoreinheit (722) zur Spannungserfassung an jedem des ersten äußeren Sammelschienenrahmens und des zweiten äußeren Sammelschienenrahmens montiert sind, und
eine Schaltungseinheit (810, 820) mindestens eine der ersten Sensoreinheit oder der zweiten Sensoreinheit und die zentrale Sammelschiene verbindet.

12. Batteriemodul nach Anspruch 11, wobei:
die zentrale Sammelschiene einen ersten Abschnitt (411), der mit dem Elektrodenableiter der Batteriezelle verbunden ist; und einen zweiten Abschnitt (412), der sich von dem ersten Abschnitt erstreckt und mit der Schaltungseinheit verbunden ist, einschließt, und
die Schaltungseinheit sich zum unteren Ende der zentralen Sammelschienenanordnung erstreckt und mit dem zweiten Abschnitt der zentralen Sammelschiene verbunden ist.

13. Batteriemodul nach Anspruch 1,
ferner umfassend ein oberes Isolierelement (910), das in einem oberen Teil der zentralen Sammelschienenanordnung angeordnet ist und ein elektrisch isolierendes Material einschließt,
die zentrale Sammelschiene in einer Vielzahl von Anzahlen angeordnet ist,
die zentrale Sammelschienenanordnung ferner einen Abstandshalter umfasst, der zwischen den zentralen Sammelschienen angeordnet ist und den Raum zwischen den zentralen Sammelschienen einnimmt, und
der Abstandshalter und das obere Isolierelement durch Eingriff mit Haken zusammengebaut sind.

14. Batteriemodul nach Anspruch 13, wobei:
das obere Isolierelement einen ersten Wandabschnitt (911), der dem ersten Batteriezellenstapel zugewandt ist; einen zweiten Wandabschnitt (912), der dem zweiten Batteriezellenstapel zugewandt ist; und einen unteren Abschnitt (913), der den ersten Wandabschnitt und den zweiten Wandabschnitt verbindet und der zentralen Sammelschienenanordnung zugewandt ist, einschließt.

15. Batteriemodul nach Anspruch 1,
ferner umfassend ein unteres Isolierelement (920), das in einem unteren Teil der zentralen Sammelschienenanordnung angeordnet ist und ein elektrisch isolierendes Material einschließt,
die zentrale Sammelschiene ist in einer Vielzahl von Anzahlen angeordnet,
die zentrale Sammelschienenanordnung umfasst ferner einen Abstandshalter, der zwischen den zentralen Sammelschienen angeordnet ist und den Raum zwischen den zentralen Sammelschienen einnimmt, und
der Abstandshalter und das untere Isolierelement sind durch Eingriff mit Haken (920H) zusammengebaut.

## Revendications

1. Un module de batterie (100) comprenant :
un empilement de cellules de batterie (120) incluant un premier empilement de cellules de batterie (120a) et un second empilement de cellules de batterie (120b) dans lesquels une pluralité de cellules de batterie (110) sont empilées ; et
un ensemble de barres omnibus centrales (400) situé entre le premier empilement de cellules de batterie et le second empilement de cellules de batterie,
dans lequel une cellule de batterie quelconque inclus dans le premier empilement de cellules de batterie et une cellule de batterie quelconque inclus dans le second empilement de cellules de batterie sont connectés électriquement par l'intermédiaire d'une barre omnibus centrale (410) incluse dans l'ensemble de barres omnibus centrales pour former une structure de cellule double (110dc),
**caractérisé en ce que** le premier empilement de cellules de batterie et le second empilement de cellules de batterie sont disposés le long d'une direction perpendiculaire à la direction dans laquelle les cellules de batterie dans le premier empilement de cellules de batterie ou le second empilement de cellules de batterie sont empilés,
dans lequel l'empilement de cellules de batterie inclut une pluralité de structures de cellule double et
dans lequel la barre omnibus centrale est disposée en une pluralité de barres omnibus centrales.

2. Le module de batterie selon la revendication 1, dans lequel :
les cellules de batterie sont des cellules de type poche et incluent des languettes d'électrode(111, 112) faisant saillie dans les deux directions, et
la languette d'électrode d'une cellule de batterie quelconque incluse dans le premier empilement de cellules de batterie et la languette d'électrode d'une cellule de batterie quelconque inclues dans le second empilement de cellules de batterie sont connectées électriquement via la barre omnibus centrale pour former une structure de cellule double.

3. Le module de batterie selon la revendication 2, dans lequel :
la languette d'électrode d'une cellule de batterie quelconque incluse dans le premier empilement de cellules de batterie et la languette d'électrode d'une cellule de batterie quelconque incluse dans le second empilement de cellules de batterie sont soudées et jointes à la barre omnibus centrale.

4. Le module de batterie selon la revendication 1, dans lequel :
l'ensemble de barres omnibus centrales comprend en outre une entretoise (420) située entre les barres omnibus centrales et occupant l'espace entre les barres omnibus centrales.

5. Le module de batterie selon la revendication 4, dans lequel :
l'entretoise est disposée en une pluralité,
une saillie (420P) et un trou d'accouplement (420CH) sont respectivement formés sur une surface et l'autre surface de l'entretoise,
un trou traversant (410H) est formé dans la barre omnibus centrale, et
la saillie d'une entretoise passe à travers le trou traversant de la barre omnibus centrale et est ensuite insérée dans le trou d'accouplement de l'autre entretoise.

6. Le module de batterie selon la revendication 4, dans lequel :
les entretoises sont disposées en une pluralité, et
les entretoises sont assemblées par engagement avec des crochets (420H1).

7. Le module de batterie selon la revendication 1,
comprenant en outre une paire d'ensembles de barres omnibus de borne (500) situés aux deux extrémités de l'ensemble de barres omnibus centrales entre le premier empilement de cellules de batterie et le second empilement de cellules de batterie,
dans lequel l'ensemble de barres omnibus de borne inclut une barre omnibus de borne (510), et
dans lequel la barre omnibus de borne inclut une première partie (511) connectée à la languette d'électrode de la cellule de batterie, et une seconde partie (512) s'étendant à partir de la première partie et exposée vers l'extérieur.

8. Le module de batterie selon la revendication 7, dans lequel :
la languette d'électrode de la cellule de batterie disposée sur le côté le plus à l'extérieur dans une direction du premier empilement de cellules de batterie est connectée à la première partie de la barre omnibus de borne incluse dans l'un quelconque des ensembles de barres omnibus de borne, et
la languette d'électrode de la cellule de batterie disposée sur le côté le plus à l'extérieur dans l'autre direction du second empilement de cellules de batterie est connectée à la première partie de la barre omnibus de borne incluse dans l'autre des ensembles de barres omnibus de borne.

9. Le module de batterie selon la revendication 7, dans lequel :
l'ensemble de barres omnibus de borne comprend en outre une entretoise de borne (520) qui fait face à une surface de la première partie de la barre omnibus de borne ; et une plaque d'isolation de borne (540) qui couvre l'autre surface de la première partie de la barre omnibus de borne.

10. Le module de batterie selon la revendication 1,
comprenant en outre un premier cadre de barre omnibus externe (710) situé sur un côté du premier empilement de cellules de batterie, et un second cadre de barre omnibus externe (720) situé sur un côté du second empilement de cellules de batterie,
dans lequel la languette d'électrode faisant saillie des cellules de batterie incluses dans le premier empilement de cellules de batterie vers le premier cadre de barre omnibus externe est connectée à une première barre omnibus externe (711) montée sur le premier cadre de barre omnibus externe, et
dans lequel la languette d'électrode faisant saillie des cellules de batterie incluses dans le second empilement de cellules de batterie vers le second cadre de barre omnibus externe est connectée à une seconde barre omnibus externe (721) montée sur le second cadre de barre omnibus externe,
sur la base du premier empilement de cellules de batterie, le premier cadre de barre omnibus externe est situé dans une direction opposée à la direction dans laquelle l'ensemble de barres omnibus centrales est situé, et
sur la base du second empilement de cellules de batterie, le second cadre de barre omnibus externe est situé dans une direction opposée à la direction dans laquelle l'ensemble de barres omnibus centrales est situé.

11. Le module de batterie selon la revendication 10, dans lequel :
une première unité de détection (712) et une seconde unité de détection (722) pour la détection de tension sont montées sur chacun du premier cadre de barre omnibus externe et du second cadre de barre omnibus externe, et
une unité de circuit (810, 820) connecte au moins l'une de la première unité de détection ou de la seconde unité de détection et la barre omnibus centrale.

12. Le module de batterie selon la revendication 11, dans lequel :
la barre omnibus centrale inclut une première partie (411) connectée à la languette d'électrode de la cellule de batterie ; et une seconde partie (412) s'étendant à partir de la première partie et connectée à l'unité de circuit, et
l'unité de circuit s'étend jusqu'à l'extrémité inférieure de l'ensemble de barres omnibus centrales et est connectée à la seconde partie de la barre omnibus centrale.

13. Le module de batterie selon la revendication 1,
comprenant en outre un élément isolant supérieur (910) situé dans une partie supérieure de l'ensemble de barres omnibus centrales et incluant un matériau électriquement isolant,
la barre omnibus centrale est disposée en une pluralité,
l'ensemble de barres omnibus centrales comprend en outre une entretoise située entre les barres omnibus centrales et occupant l'espace entre les barres omnibus centrales, et
l'entretoise et l'élément isolant supérieur sont assemblés par engagement avec des crochets.

14. Le module de batterie selon la revendication 13, dans lequel :
l'élément isolant supérieur inclut une première partie de paroi (911) faisant face au premier empilement de cellules de batterie ; une seconde partie de paroi (912) faisant face au second empilement de cellules de batterie ; et une partie inférieure (913) connectant la première partie de paroi et la seconde partie de paroi et faisant face à l'ensemble de barres omnibus centrales.

15. Le module de batterie selon la revendication 1,
comprenant en outre un élément isolant inférieur (920) situé dans une partie inférieure de l'ensemble de barres omnibus centrales et incluant un matériau électriquement isolant,
la barre omnibus centrale est disposée en une pluralité,
l'ensemble de barres omnibus centrales comprend en outre une entretoise située entre les barres omnibus centrales et occupant l'espace entre les barres omnibus centrales, et
l'entretoise et l'élément isolant inférieur sont assemblés par engagement avec des crochets (920H).
